# EUROPÄISCHE PATENTSCHRIFT

(11) **EP 0 719 838 B1**
(45) Veröffentlichungstag und Bekanntmachung des Hinweises auf die Patenterteilung: **16.09.1998**
(21) Anmeldenummer: 96103936.9
(22) Anmeldetag: 24.06.1991
(51) Int. Cl.: C09B 43/11, C09B 43/16, C09B 62/09, D06P 3/82, D06P 3/60

(54) **Azofarbstoffe**
Azo dyestuffs
Colorants azoiques

(30) Priorität: 02.07.1990 CH 2195/90
(43) Veröffentlichungstag der Anmeldung: 03.07.1996
(62) Teilanmeldung aus: 91810492.8
(73) Patentinhaber: Ciba Specialty Chemicals Holding Inc., 4057 Basel (CH)
(72) Erfinder: Schaulin, Rudolf, Dr., 4125 Riehen (CH); Lauk, Urs, Dr., 8047 Zürich (CH)

(56) Entgegenhaltungen:
- EP-A- 0 256 650
- FR-A- 2 228 822
- GB-A- 2 036 780

## Beschreibung

Die vorliegende Erfindung betrifft neue Azofarbstoffe, Verfahren zu deren Herstellung sowie deren Verwendung zum Färben und Bedrucken von Fasermaterialien, insbesondere von textilen Fasermaterialien.

Gegenstand der vorliegenden Erfindung sind Verbindungen der Formel 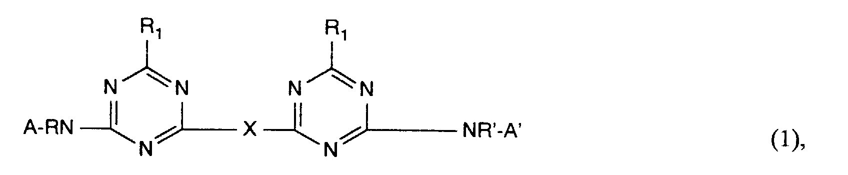 worin A ein Rest der Formel 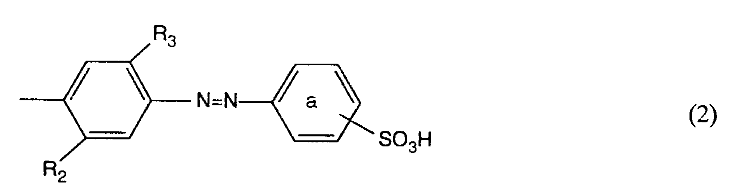 ist, A' die Bedeutung von A hat oder für einen Rest der Formel 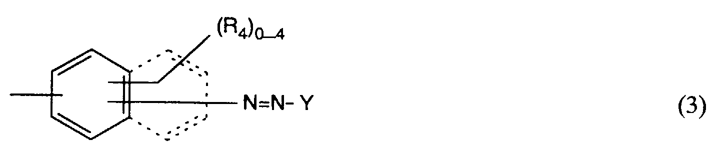 steht, R und R' unabhängig voneinander Wasserstoff oder gegebenenfalls substituiertes C₁-C₄-Alkyl bedeuten, R₁ Hydroxy, C₁-C₄-Alkoxy, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl ist, X ein Brückenglied bedeutet, R₂ und R₃ unabhängig voneinander C₁-C₄-Alkyl, C₁-C₄-Alkoxy, Sulfo, Chlor, Hydroxy, Carboxy oder unsubstituiertes oder im Alkylteil durch Hydroxy substituiertes C₂-C₄-Alkanoylamino bedeuten, der Phenylrest (a) gegebenenfalls weitersubstituiert ist, (R₄)₀₋₄ für 0 bis 4 gleiche oder verschiedene Reste ausgewählt aus der Gruppe C₁-C₄-Alkyl, C₁-C₄-Alkoxy, Sulfo, Chlor, Carboxy und Hydroxy steht und Y ein gegebenenfalls weitersubstituierter Phenylrest oder der Rest eines 1-Phenylpyrazol-5-ons oder 6-Hydroxypyrid-2-ons ist.

In der FR-A-2,228,822 werden Farbstoffe offenbart, die sich von den erfindungsgemässen Farbstoffen dadurch unterscheiden, dass die nicht-chromophoren Substituenten an den Triazinresten Chlor sind.

Die Substituenten R und R', die gleich oder voneinander verschieden sind, haben die Bedeutung Wasserstoff oder unsubstituiertes oder z.B. durch Chlor, Hydroxy, Cyano, Carboxy, Sulfo, Sulfato, Methoxy, Ethoxy, Methoxycarbonyl oder Ethoxycarbonyl substituiertes C₁-C₄-Alkyl. Die Bedeutung Sulfo umfasst generell die freie Säureform (-SO₃H) als auch die Salzform, wobei insbesondere Alkalimetallsalze (Li, Na, K) oder Ammoniumsalze in Frage kommen.

Beispiele für geeignete Substituenten R und R' sind:
C₁-C₄-Alkyl, womit generell Methyl, Ethyl, n- oder iso-Propyl, oder n-, iso-, sec.- oder tert.-Butyl umfasst sind; Carboxymethyl, β-Carboxyethyl, Methoxycarbonylmethyl, Ethoxycarbonylmethyl, β-Methoxyethyl, β-Ethoxyethyl, β-Chlorethyl, γ-Chlorpropyl, β-Hydroxyethyl, β-Hydroxybutyl, β-Cyanethyl, Sulfomethyl, β-Sulfoethyl, β-Sulfatoethyl.

R und R' stehen unabhängig voneinander bevorzugt für Methyl oder Ethyl und besonders bevorzugt jeweils für Wasserstoff.

Bedeutet R₁ C₁-C₄-Alkoxy, so ist hierunter generell Methoxy, Ethoxy, n- oder iso-Propoxy oder n-, iso-, sec.- oder tert.-Butoxy zu verstehen.

R₁ steht bevorzugt für Hydroxy, C₁-C₃-Alkoxy, C₁-C₂-Alkylthio, Amino, unsubstituiertes oder im Alkylteil durch Hydroxy, Carboxy, Sulfo, Methoxy oder Ethoxy substituiertes N-Mono- oder N,N-Di-C₁-C₄-Alkylamino, unsubstituiertes oder im Phenylteil durch Chlor, Methyl, Methoxy, Carboxy und/oder Sulfo substituiertes Phenylamino, N-C₁-C₄-Alkyl-N-phenylamino oder Morpholino.

Beispiele für bevorzugte Substituenten R₁ sind somit Hydroxy, Methoxy, Ethoxy, n- oder iso-Propoxy, Methylthio, Ethylthio, Amino, Methylamino, Ethylamino, Carboxymethyl-amino, β-Hydroxyethylamino, N,N-Di-β-hydroxyethylamino, β-Sulfoethylamino, Phenylamino, o-, m- oder p-Methylphenylamino, o-, m- oder p-Methoxyphenylamino, o-, m- oder p-Chlorphenylamino, o-, m- oder p-Sulfophenylamino, 2,4- oder 2,5-Disulfophenylamino, o-Carboxyphenylamino, N-Ethyl-N-phenylamino, N-Methyl-N-phenylamino und Morpholino.

Besonders bevorzugt sind für R₁ die Bedeutungen unsubstituiertes oder im Alkylteil durch Carboxy, Hydroxy oder Methoxy substituiertes N-Mono- oder N,N-Di-C₁-C₂-Alkylamino, Morpholino, Ethylthio, Phenylamino und o-, m- oder p-Sulfophenylamino.

Eine besonders bevorzugte Ausführungsform der vorliegenden Erfindung betrifft Verbindungen der zuvor angegebenen Formel (1), worin R₁ N-β-Hydroxyethylamino, N,N-Di-β-hydroxyethylamino oder Morpholino bedeutet.

Geeignete Brückenglieder X entsprechen z.B. der Formel

-NR₅-alk-NR'₅- (4a),

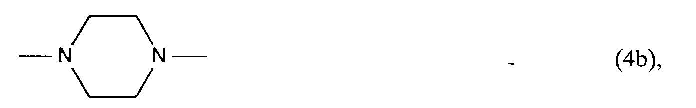

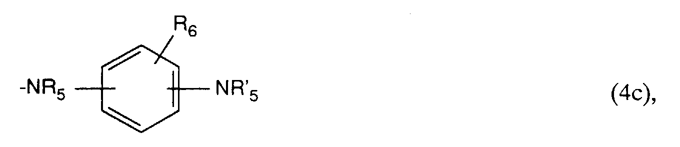

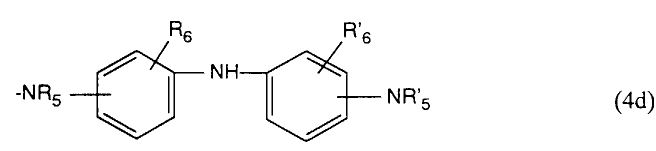

oder 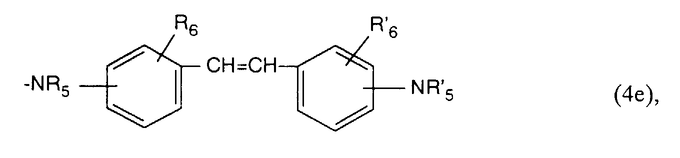 worin für R₅ und R'₅ unabhängig die zuvor für R und R' angegebenen Bedeutungen und Bevorzugungen gelten, R₆ und R'₆ unabhängig voneinander für Wasserstoff, Sulfo, Methyl, Methoxy oder Chlor stehen und alk einen C₁-C₆-Alkylenrest, z.B. einen Methylen-, Ethylen-, 1,2-Propylen-, 1,3-Propylen-, 1,4-Butylen-, 1,5-Pentylen- oder 1,6-Hexylenrest oder ein verzweigtes Isomer davon, bedeutet.

Bei dem Rest alk in Formel (4a) handelt es sich vorzugsweise um einen C₂-C₄-Alkylenrest. R₆ und/oder R'₆ in den Formeln (4c), (4d) und (4e) stehen unabhängig voneinander bevorzugt für Wasserstoff oder Sulfo.

Die bevorzugten Brückenglieder X entsprechen den Formeln

-NH-(CH₂)₂₋₄-NH- (4a'),

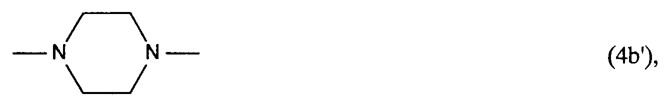

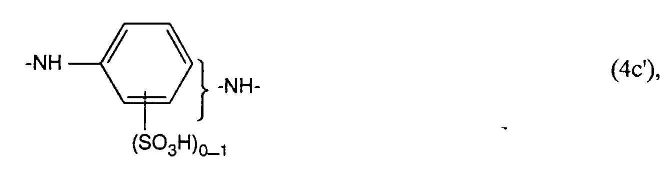

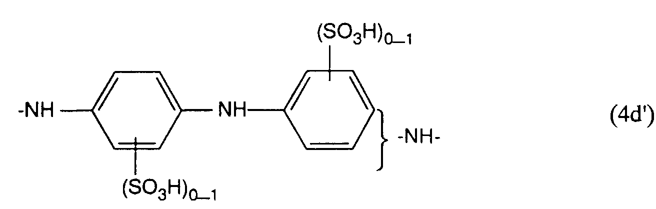

oder

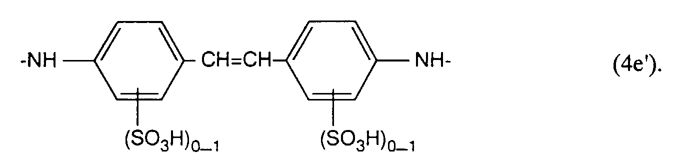

A und A' und R und R' sind vorzugsweise jeweils gleich.

Bei R₂ oder R₃ in Formel (2) als C₂-C₄-Alkanoylaminorest handelt es sich z.B. um einen unsubstituierten oder durch Hydroxy substituierten Acetylamino-, Propionylamino oder Butyrylaminorest und vorzugsweise um einen unsubstituierten oder durch Hydroxy substituierten C₂-C₃-Alkanoylaminorest. Beispiele für geeignete Alkanoylaminoreste R₂ und R₃ sind Acetylamino, n-Propionylamino, iso-Propionylamino, Hydroxyacetylamino und 2-oder 3-Hydroxypropionylamino, wobei die Bedeutungen Acetylamino und Hydroxyacetylamino besonders bevorzugt sind.

R₂ und/oder R₃ stehen unabhängig voneinander bevorzugt für Methyl, Ethyl, Methoxy, Ethoxy, Sulfo, Hydroxy, Chlor, Carboxy, Acetylamino, Propionylamino oder Hydroxyacetylamino.

Besonders bevorzugte Bedeutungen von R₂ und R₃ sind unabhängig voneinander Methyl, Methoxy, Sulfo und Acetylamino.

Eine besonders bevorzugte Ausführungsform der vorliegenden Erfindung betrifft Verbindungen der Formel (1), worin R₂ Methoxy und R₃ Methyl sind.

Der Phenylrest (a) kann z.B. durch einen oder mehrere gleiche oder verschiedene Substituenten ausgewählt aus der Gruppe C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino und Arylazo weitersubstituiert sein.

Beispiele für Halogensubstituenten sind generell Brom, Fluor und besonders Chlor.

Geeignete Arylazo-Substituenten am Phenylrest (a) sind z.B. ein 1- oder 2-Naphthylazorest oder vorzugsweise ein Phenylazorest, wobei die genannten Reste jeweils unsubstituiert oder z.B. durch Sulfo, C₁-C₄-Alkyl, C₁-C₄-Alkoxy, Hydroxy und/oder Halogen weitersubstituiert sein können. Ist der Phenylrest (a) durch einen Arylazorest substituiert, handelt es sich dabei vorzugsweise um einen unsubstituierten oder durch Sulfo, Methyl, Methoxy und/oder Chlor substituierten Phenylazorest.

Der Phenylrest (a) trägt vorzugsweise keine weiteren Substituenten oder ist durch einen oder mehrere Substituenten ausgewählt aus der Gruppe C₁-C₄-Alkyl, C₁-C₄-Alkoxy, Chlor, Hydroxy, Carboxy, C₂-C₃-Alkanoylamino und unsubstituiertes oder durch Sulfo, Methyl, Methoxy und/oder Chlor substituiertes Phenylazo substituiert.

Besonders bevorzugt trägt der Phenylrest (a) keine weiteren Substituenten oder ist einfach durch Methyl, Methoxy, Acetylamino oder Chlor weitersubstituiert.

(R₄)₀₋₄ in Formel (3) steht vorzugsweise für 0 bis 4 gleiche oder verschiedene Reste ausgewählt aus der Gruppe Methyl, Methoxy, Chlor, Hydroxy, Carboxy und Sulfo.

Beispiele für geeignete Substituenten am Rest Y sind:
C₁-C₄-Alkyl, C₁-C₄-Alkoxy; C₁-C₄-Alkoxy-C₁-C₄-alkyl, z.B. Methoxymethyl, Ethoxymethyl, n-Propoxymethyl, iso-Propoxymethyl, n-Butoxymethyl, Ethoxyethyl, n-Butoxyethyl, Ethoxypropyl, Butoxypropyl oder Methoxybutyl; gegebenenfalls durch Hydroxy substituiertes C₂-C₄-Alkanoylamino, z.B. Acetylamino, Propionylamino oder Hydroxyacetylamino; Benzoylamino; Amino; unsubstituiertes oder im Alkylteil durch -OH, -OCOCH₃, -OSO₃H, -CN oder Halogen substituiertes N-Mono- oder N,N-Di-C₁-C₄-Alkylamino, z.B. Methylamino, Ethylamino, n- oder iso-Propylamino, n-, sec.-, iso- oder tert.-Butylamino, N,N-Di-β-hydroxyethylamino, N,N-Di-β-sulfatoethylamino, Hydroxypropylamino, β-Sulfatoethylamino, β-Chlorethylamino, β-Acetyloxyethylamino; Phenylamino; Mono- oder Di-Sulfobenzylamino; C₁-C₄-Alkoxycarbonyl, z.B. Methoxy- oder Ethoxycarbonyl; C₁-C₄-Alkylsulfonyl, z.B. Methyl- oder Ethylsulfonyl; Phenylsulfonyloxy; Trifluormethyl; Nitro; Cyano; Halogen; Carbamoyl; N-Mono- oder N,N-Di-C₁-C₄-Alkylcarbamoyl; Sulfamoyl; N-Mono- oder N,N-Di-C₁ -C₄-Alkylsulfamoyl; N-(β-hydroxyethyl)-sulfamoyl; N,N-Di-(β-hydroxyethyl)-sulfamoyl; N-Phenylsulfamoyl; Hydroxy; Carboxy; Sulfo; Sulfomethyl; Ureido; unsubstituiertes oder z.B. durch Sulfo, C₁-C₄-Alkyl, C₁-C₄-Alkoxy, Hydroxy und/oder Halogen substituiertes Phenylazo.

A' entspricht als von A verschiedener Rest bevorzugt der Formel 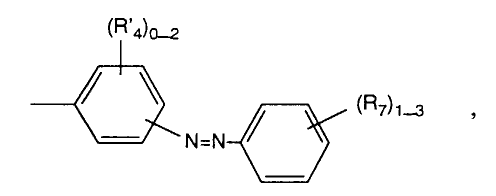 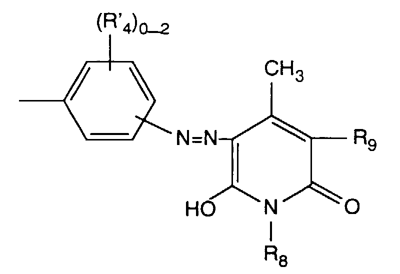 oder 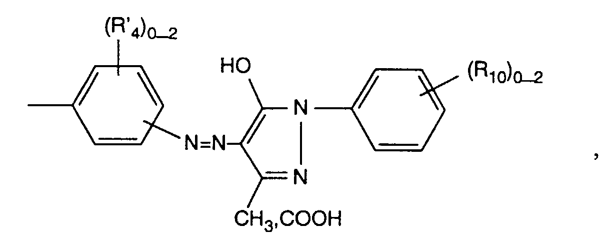 worin (R'₄)₀₋₂ für 0 bis 2 gleiche oder verschiedene Reste ausgewählt aus der Gruppe Methyl, Methoxy, Sulfo, Chlor, Hydroxy und Carboxy steht, (R₇)₁₋₃ 1 bis 3 gleiche oder verschiedene Substituenten ausgewählt aus der Gruppe Sulfo, Methyl, Methoxy, Chlor, Hydroxy, Carboxy und o-, m- oder p-Sulfophenylazo darstellt, R₈ Wasserstoff, C₁-C₄-Alkyl oder C₁-C₄-Alkoxy-C₁-C₄-alkyl bedeutet, R₉ Sulfomethyl, Cyano oder Carbamoyl ist und (R₁₀)₀₋₂ für 0 bis 2 gleiche oder verschiedene Reste ausgewählt aus der Gruppe Methyl, Methoxy, Sulfo, Hydroxy, Amino, Acetylamino und Hydroxyacetylamino steht. In Frage kommen darüberhinaus auch Metallkomplexe der zuvor genannten Reste A', wie z.B. die entsprechenden Kupferkomplexe.

Die Verbindungen der zuvor angegebenen Formel (1) werden hergestellt, z.B. indem man
a) unabhängig voneinander eine Verbindung der Formel 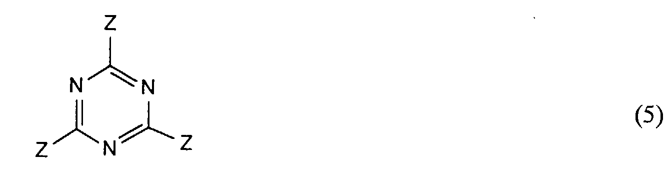 mit einer Verbindung der Formel

   A-NHR (6)

   zur Verbindung der Formel 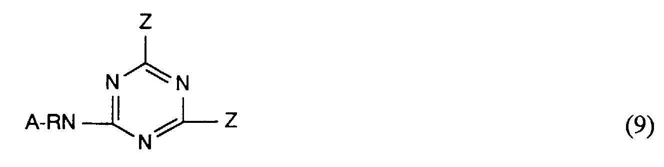 und eine weitere Verbindung der Formel (5) mit einer Verbindung der Formel

   A'-NHR' (7)

   zur Verbindung der Formel 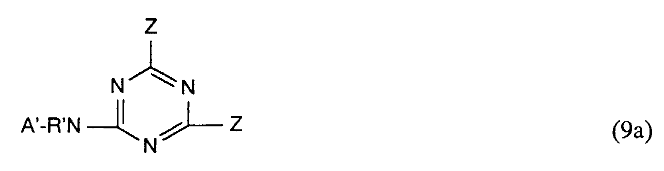 umsetzt,
b) eine Verbindung der Formel

   H-X-H (10)

   nacheinander in beliebiger Reihenfolge mit den gemäss a) erhältlichen Verbindungen der Formeln (9) und (9a) umsetzt und
c) die gemäss b) erhältliche Verbindung der Formel 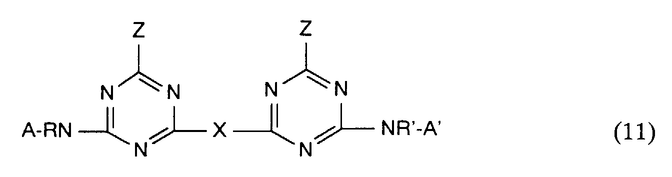 mit einer Verbindung der Formel

   R₁H (8)

   umsetzt, worin A, A', R, R', R₁ und X jeweils die zuvor angegebene Bedeutung haben und Z Halogen, vorzugsweise Chlor ist.

Vorzugsweise setzt man die Trihalogenotriazinverbindung der Formel (5) zunächst mit in etwa stöchiometrischen Mengen einer Aminoazoverbindung der Formel (6) oder (7) bei einer Temperatur von -5 bis 20°C, vorzugsweise 0 bis 5°C um, wobei der pH-Wert durch Zugabe geeigneter Basen, z.B. Ammonium- oder Alkalimetallbasen wie Ammoniak, Lithium-, Natrium- oder Kaliumhydroxid oder -carbonat, neutral bis leicht sauer, vorzugsweise bei 5 bis 7, gehalten wird.

Die Reaktion der Verbindung der Formel (10) nacheinander mit den gemäss a) erhaltenen Verbindungen der Formel (9) und (9a) wird vorzugsweise bei leicht erhöhter Temperatur, vorteilhaft z.B. bei 30 bis 50°C, und einem neutralen bis leicht sauren pH, der z.B. 6 bis 7 beträgt, durchgeführt, wobei man zweckmässig in etwa stöchiometrische Mengen der Verbindungen (9), (9a) und (10) einsetzt. Handelt es sich bei den Verbindungen der Formel (6) und (7) um identische Aminoazoverbindungen, so stellt man vorteilhaft zunächst 2 Mol-Aequivalente der Verbindung der Formel (9) her und setzt diese mit ca. 1 Mol-Aequivalent Verbindung der Formel (10) um. Die gemäss b) erhältlichen Verbindungen der Formel (11) enthalten noch 2 Halogenatome Z, die durch Reaktion mit einer Verbindung der Formel (8) bei erhöhter Temperatur, vorzugsweise 70 bis 100°C, und einem neutralen bis leicht alkalischen pH-Wert, der je nach eingesetzter Verbindung der Formel (8) z.B. 7 bis 9 beträgt, in eine beliebige Gruppe R₁ umgewandelt werden können.

Ein weiterer Gegenstand der vorliegenden Erfindung ist die Verwendung der Azofarbstoffe der Formel (1), gegebenenfalls auch Mischungen dieser Verbindungen, zum Färben oder Bedrucken von stickstoffhaltigen und insbesondere hydroxylgruppenhaltigen Fasermaterialien.

Die erfindungsgemässen Azofarbstoffe der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasem, wie z.B. aus Wolle/Baumwoll-, Polyamid/Baumwoll-, Polyacryl/Baumwoll- oder insbesondere Polyester/Baumwoll-Mischfasem durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke.

Neben den textilen Substraten können auch Leder und Papier mit erfindungsgemässen Verbindungen (Farbstoffen) der Formel (1) gefärbt werden.

Man erhält egale Färbungen in gelben Farbtönen mit guten Allgemeinechtheiten, insbesondere guten Reib-, Nass-, Nassreib-, Schweiss- und Lichtechtheiten. Sofern nötig, kann man die Nassechtheiten, insbesondere die Waschechtheit, der erhaltenen Direktfärbungen und -drucke durch eine Nachbehandlung mit sog. Fixiermitteln noch wesentlich verbessern.

Die erfindungsgemässen Farbstoffe der Formel (1) sind gut mit anderen Farbstoffen, insbesondere Dispersionsfarbstoffen kombinierbar. Die erfindungsgemässen Farbstoffe weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 110 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffen der Formel (1) in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie der erfindungs-gemässe Farbstoff sie aufweist, so ist es auch möglich Ton-in-Ton-Färbungen zu erhalten.

Mit der Bereitstellung der erfindungsgemässen Farbstoffe der Formel (1) kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die erfindungsgemässen Verbindungen der Formel (1) eignen sich auch zur Herstellung von wässrigen Tinten für den Tintenstrahldruck (ink-jet printing).

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 4,6 Teile Cyanurchlorid werden in 50 Teilen Aceton und 300 Teilen Wasser/Eis-Gemisch vorgelegt und 8,5 Teile des Aminoazofarbstoffes der Formel 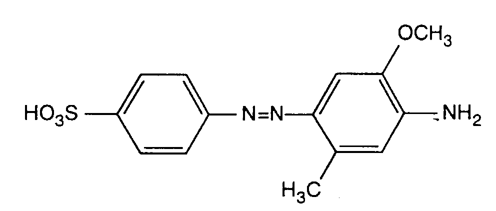 in 300 Teilen Wasser bei 0 bis 5°C und pH 7 hinzugegeben. Man lässt anschliessend 3 Stunden bei 0 bis 10°C rühren und hält dabei den pH-Wert durch Zugabe von Natriumhydroxid-Lösung konstant bei 7,0. Anschliessend werden 4,6 Teile 4,4'-Diaminostilben-2,2'-disulfonsäure neutral gelöst in 50 Teilen Wasser zugegeben, das Reaktionsgemisch auf ca. 40°C erwärmt und 6 Stunden bei 40 bis 50°C gerührt, wobei der pH-Wert durch Zugabe von Natriumhydroxid-Lösung bei 7 gehalten wird. Man setzt dann 3,3 Teile Morpholin zu, erhitzt auf 95°C und lässt 4 Stunden bei dieser Temperatur und pH 7,5 rühren. Der Farbstoff wird mit Kochsalz ausgesalzen, filtriert, gewaschen und getrocknet; er entspricht in Form der freien Säure der Formel 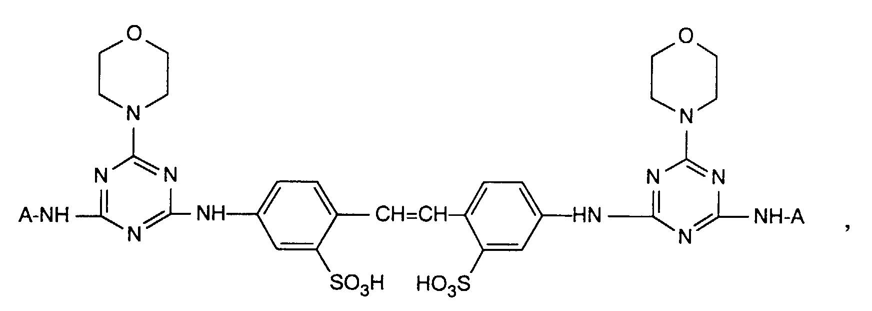 worin A den Rest der Formel 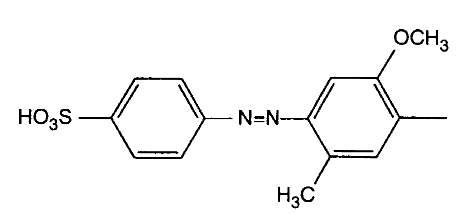 bedeutet, und färbt Baumwolle in gelbstichig orangen Tönen mit guten Allgemeinechtheiten.

Beispiel 2: 115,5 g 4-Aminoazobenzol-3,4'-disulfonsäure (80 %ig) werden in einem Gemisch aus Wasser und konz. HCl gelöst und mit 125 ml 4 N Natriumnitritlösung in üblicher Weise diazotiert. Die Diazoniumsalzlösung wird unter Eiskühlung langsam zu einer Lösung von 30,3 g 2,5-Dimethylanilin in N,N-Dimethylformamid zugetropft und der pH-Wert während der Kupplung durch Zugabe von Natriumacetat konstant bei 4,8 bis 5 gehalten. Man lässt über Nacht ausrühren und filtriert dann das ausgefallene Produkt der Formel 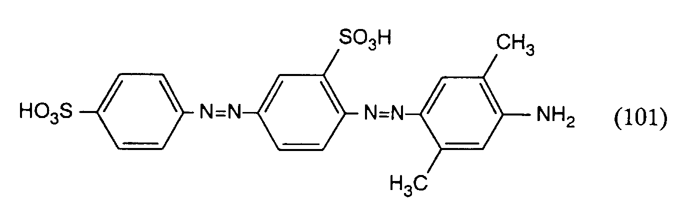 ab.

Verwendet man statt 2,5-Dimethylanilin eine äquivalente Menge 2-Methoxy-5-methylanilin, 2,5-Dimethoxyanilin oder 2-Methoxy-5-acetylaminoanilin, erhält man analoge Disazoverbindungen.

Beispiel 3: 1,9 g Cyanurchlorid werden in wenig Aceton gelöst und auf Eis ausgetragen. Die so erhaltene feine Cyanurchlorid-Suspension wird zu einer Lösung von 5,0 g der Verbindung der Formel (101) gemäss Beispiel 2 in 200 ml Wasser gegeben. Man kondensiert bei einer Temperatur von 0 bis 5°C und hält den pH-Wert durch Zugabe von Natriumhydroxidlösung konstant bei 4,5.

Zum erhaltenen Dichlortriazinkondensat (Ueberprüfung mittels HPLC) wird anschliessend eine wässrige Lösung enthaltend 0,55 g 1,4-Phenylendiamin gegeben und bei Raumtemperatur und pH 7 auskondensieren gelassen.

Es folgt eine ca. 3 Stunden dauernde 3. Kondensation mit 1,74 g Morpholin bei ca. 80°C. Danach wird der Farbstoff, der in Form der freien Säure der Formel 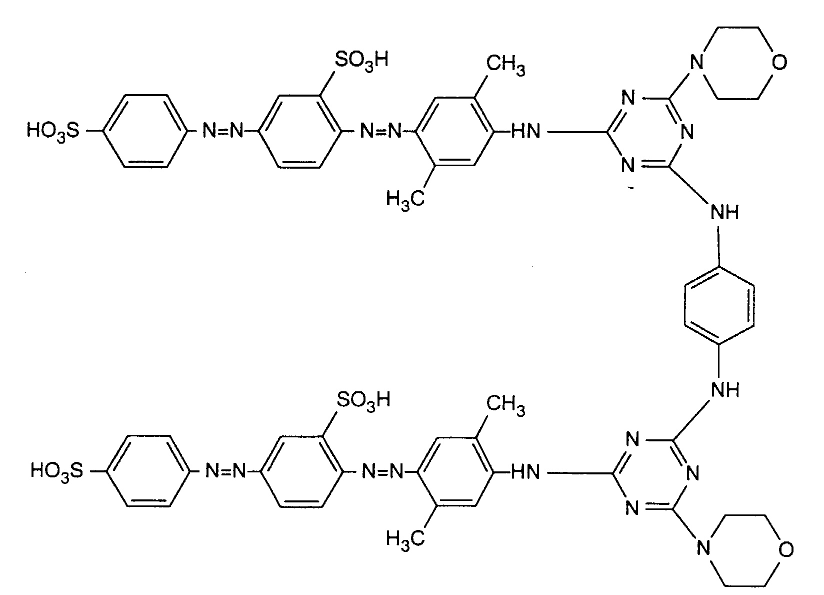 entspricht, durch Aussalzen isoliert. Es ergibt sich ein braunes Pulver, welches Baumwolle in orangebraunen Tönen mit guten Allgemeinechtheiten färbt.

Beispiele 4 bis 17: Analog wie im Beispiel 3 beschrieben lassen sich die in der Tabelle 1 aufgeführten Farbstoffe der allgemeinen Formel 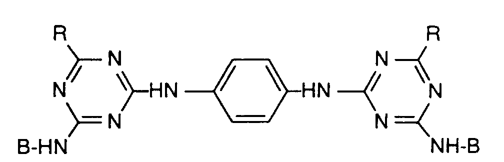 herstellen, die Cellulosematerialien in der angegebenen Nuance mit guten Allgemeinechtheiten färben.

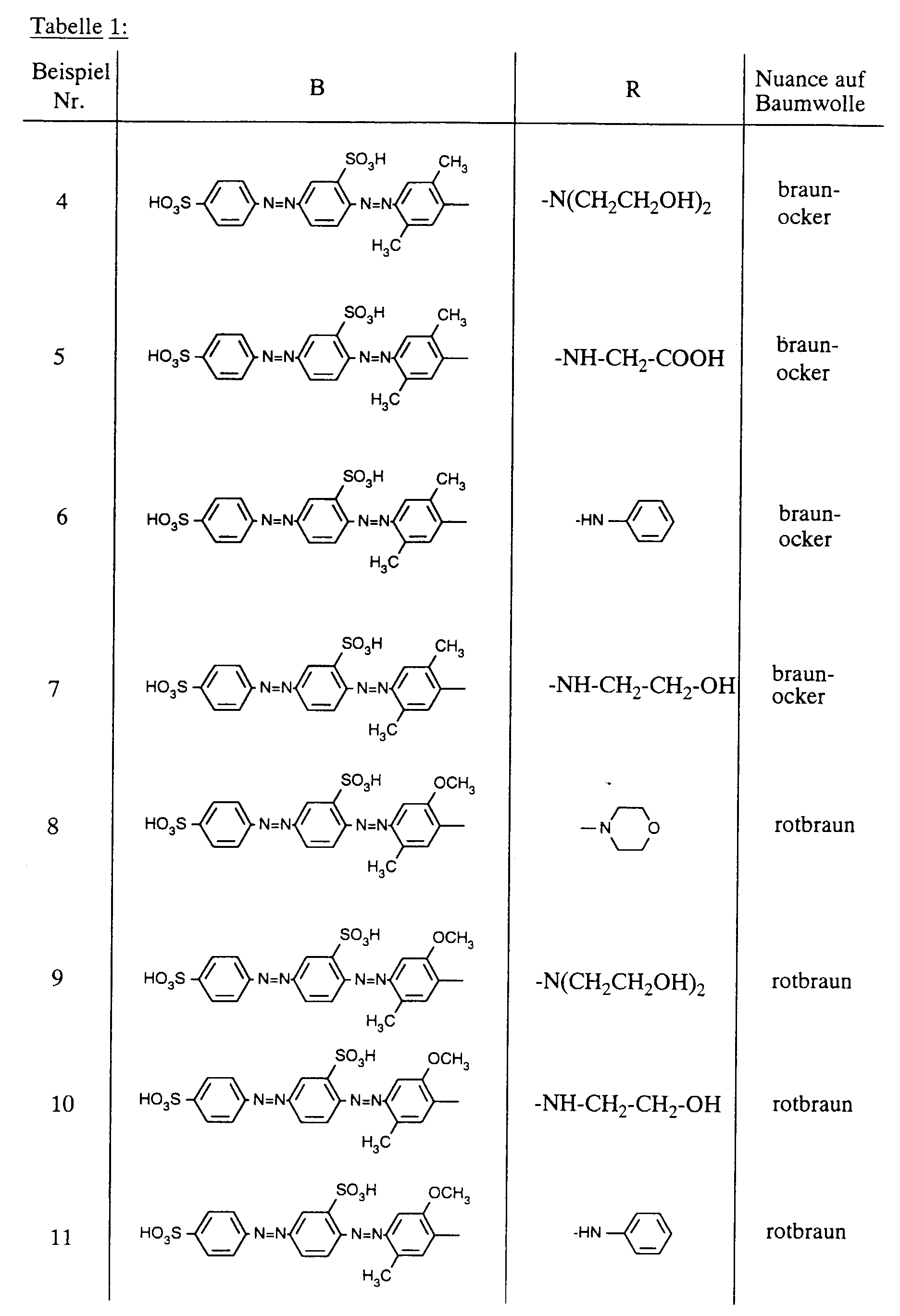

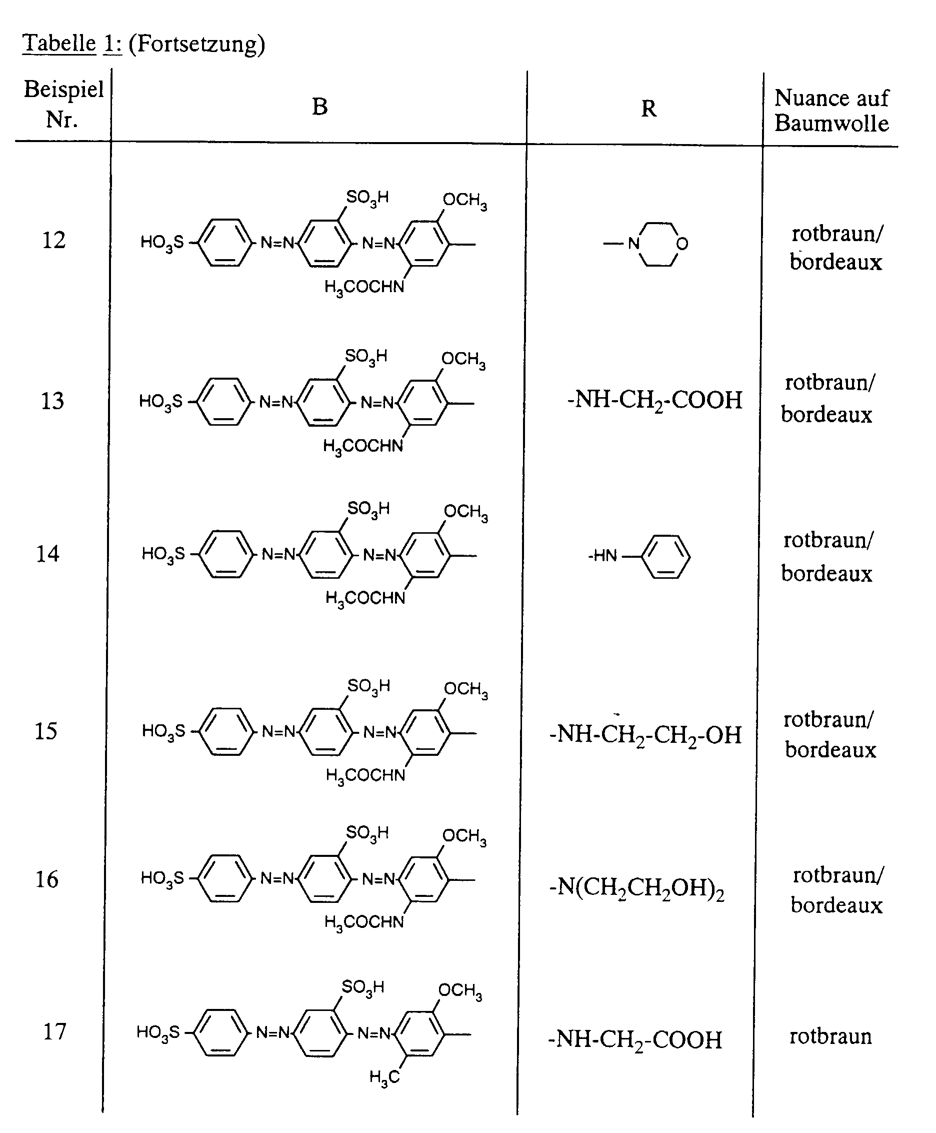

## Patentansprüche (Patentansprüche für folgende(n) Vertragsstaat(en): BE, CH, DE, FR, GB, IT, LI)

1. Verbindungen der Formel 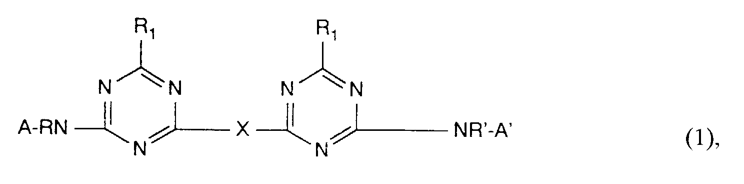 worin A ein Rest der Formel 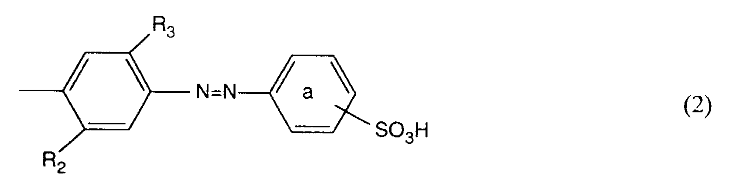 ist, A' die Bedeutung von A hat oder für einen Rest der Formel 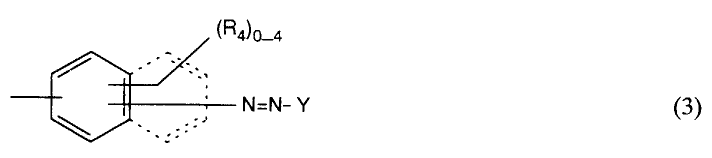 steht, R und R' unabhängig voneinander Wasserstoff oder gegebenenfalls substituiertes C₁-C₄-Alkyl bedeuten, R₁ Hydroxy, C₁-C₄-Alkoxy, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl ist, X ein Brückenglied bedeutet, R₂ und R₃ unabhängig voneinander C₁-C₄-Alkyl, C₁-C₄-Alkoxy, Sulfo, Chlor, Hydroxy, Carboxy oder unsubstituiertes oder im Alkylteil durch Hydroxy substituiertes C₂-C₄-Alkanoylamino bedeuten, der Phenylrest (a) gegebenenfalls weitersubstituiert ist, (R₄)₀₋₄ für 0 bis 4 gleiche oder verschiedene Reste ausgewählt aus der Gruppe C₁-C₄-Alkyl, C₁-C₄-Alkoxy, Sulfo, Chlor, Carboxy und Hydroxy steht und Y ein gegebenenfalls weitersubstituierter Phenylrest oder der Rest eines 1-Phenylpyrazol-5-ons oder 6-Hydroxypyrid-2-ons ist.

2. Verbindungen gemäss Anspruch 1, dadurch gekennzeichnet, dass R und R' jeweils Wasserstoff bedeuten.

3. Verbindungen gemäss Anspruch 1 oder 2, dadurch gekennzeichnet, dass R₁ Hydroxy, C₁-C₃-Alkoxy, C₁-C₂-Alkylthio, Amino, unsubstituiertes oder im Alkylteil durch Hydroxy, Carboxy, Sulfo, Methoxy oder Ethoxy substituiertes N-Mono- oder N,N-Di-C₁-C₄-Alkylamino, unsubstituiertes oder im Phenylteil durch Methyl, Methoxy, Chlor, Carboxy und/oder Sulfo substituiertes Phenylamino, N-C₁-C₄-Alkyl-N-phenylamino oder Morpholino bedeutet.

4. Verbindungen gemäss einem der Ansprüche 1 bis 3, dadurch gekennzeichnet, dass R₁ unsubstituiertes oder im Alkylteil durch Hydroxy, Carboxy oder Methoxy substituiertes N-Mono- oder N,N-Di-C₁-C₂-Alkylamino, Morpholino, Ethylthio, Phenylamino oder o-, m- oder p-Sulfophenylamino bedeutet.

5. Verbindungen gemäss einem der Ansprüche 1 bis 4, dadurch gekennzeichnet, dass R₁ N-β-Hydroxyethylamino, N,N-Di-β-hydroxyethylamino oder Morpholino bedeutet.

6. Verbindungen gemäss einem der Ansprüche 1 bis 5, dadurch gekennzeichnet, dass X für ein Brückenglied der Formel
-NR₅-alk-NR'₅- (4a), 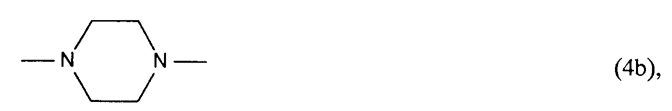 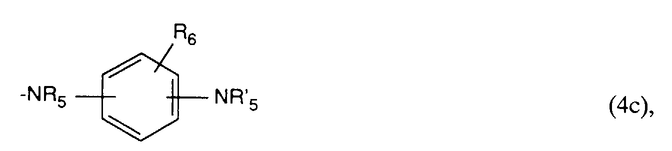 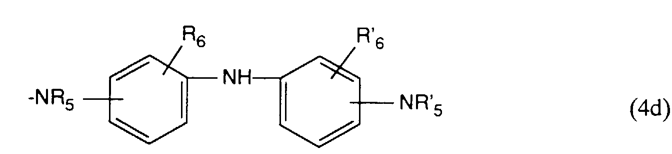
oder 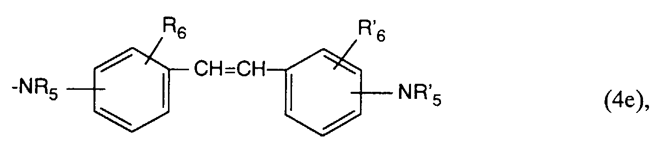 steht, worin für R₅ und R'₅ unabhängig je Wasserstoff oder gegebenenfalls substituiertes C₁-C₄-Alkyl bedeuten, R₆ und R'₆ unabhängig voneinander je Wasserstoff, Sulfo, Methyl, Methoxy oder Chlor sind und alk einen C₁-C₆-Alkylenrest bedeutet.

7. Verbindungen gemäss einem der Ansprüche 1 bis 6, dadurch gekennzeichnet, dass X ein Brückenglied der Formel
-NH-(CH₂)₂₋₄-NH- (4a'), 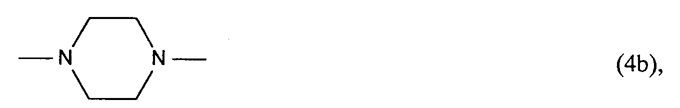 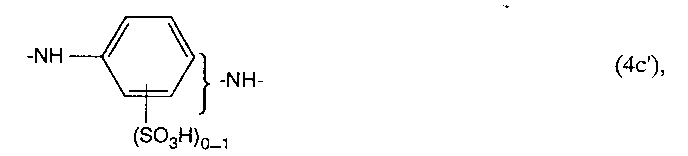 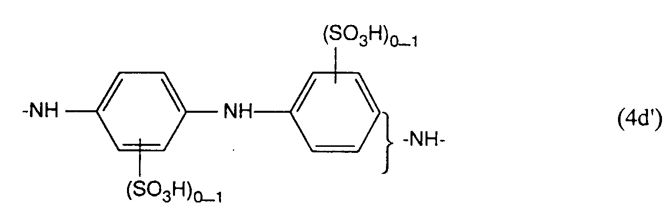
oder 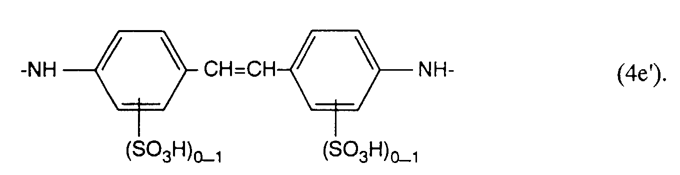 darstellt.

8. Verbindungen gemäss einem der Ansprüche 1 bis 7, dadurch gekennzeichnet, dass R₂ und R₃ unabhängig voneinander Methyl, Ethyl, Methoxy, Ethoxy, Sulfo, Hydroxy, Chlor, Carboxy, Acetylamino, Propionylamino oder Hydroxyacetylamino bedeuten.

9. Verbindungen gemäss einem der Ansprüche 1 bis 8, dadurch gekennzeichnet, dass R₂ und R₃ unabhängig voneinander Methyl, Methoxy, Sulfo oder Acetylamino bedeuten.

10. Verbindungen gemäss einem der Ansprüche 1 bis 9, dadurch gekennzeichnet, dass R₂ Methoxy und R₃ Methyl sind.

11. Verbindungen gemäss einem der Ansprüche 1 bis 10, dadurch gekennzeichnet, dass der Phenylrest (a) unsubstituiert oder durch C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino oder Arylazo weitersubstituiert ist.

12. Verbindungen gemäss einem der Ansprüche 1 bis 11, dadurch gekennzeichnet, dass der Phenylrest (a) unsubstituiert oder durch C₁-C₄-Alkyl, C₁-C₄-Alkoxy, Chlor, Hydroxy, Carboxy, C₂-C₃-Alkanoylamino und/oder unsubstituiertes oder durch Sulfo, Methyl, Methoxy und/oder Chlor substituiertes Phenylazo weitersubstituiert ist.

13. Verbindungen gemäss einem der Ansprüche 1 bis 12, dadurch gekennzeichnet, dass der Phenylrest (a) unsubstituiert oder durch Methyl, Methoxy, Acetylamino oder Chlor weitersubstituiert ist.

14. Verbindungen gemäss einem der Ansprüche 1 bis 13, dadurch gekennzeichnet, dass A und A' und R und R' jeweils gleich sind.

15. Verbindungen gemäss einem der Ansprüche 1 bis 13, dadurch gekennzeichnet, dass (R₄)₀₋₄ für 0 bis 4 gleiche oder verschiedene Reste ausgewählt aus der Gruppe Methyl, Methoxy, Chlor, Hydroxy, Carboxy und Sulfo steht.

16. Verbindungen gemäss einem der Ansprüche 1 bis 13 oder 15, dadurch gekennzeichnet, dass der Rest Y unsubstituiert oder durch C₁-C₄-Alkyl, C₁-C₄-Alkoxy, C₁-C₄-Alkoxy-C₁-C₄-alkyl, gegebenenfalls durch Hydroxy substituiertes C₂-C₄-Alkanoylamino, Benzoylamino, Amino, unsubstituiertes oder im Alkylteil durch -OH, -OCOCH₃, -OSO₃H, -CN oder Halogen substituiertes N-Mono- oder N,N-Di-C₁-C₄-Alkylamino, Phenylamino, Mono- oder Di-Sulfobenzylamino, C₁-C₄-Alkoxycarbonyl, C₁-C₄-Alkylsulfonyl, Phenylsulfonyloxy, Trifluormethyl, Nitro, Cyano, Halogen, Carbamoyl, N-Mono- oder N,N-Di-C₁-C₄-Alkylcarbamoyl, Sulfamoyl, N-Mono- oder N,N-Di-C₁-C₄-Alkylsulfamoyl, N-(β-hydroxyethyl)-sulfamoyl, N,N-Di-(β-hydroxyethyl)-sulfamoyl, N-Phenylsulfamoyl, Hydroxy, Carboxy, Sulfo, Sulfomethyl, Ureido und/oder unsubstituiertes oder durch Sulfo, C₁-C₄-Alkyl, C₁-C₄-Alkoxy, Hydroxy und/oder Halogen substituiertes Phenylazo substituiert ist.

17. Verbindungen gemäss einem der Ansprüche 1 bis 13, 15 oder 16, dadurch gekennzeichnet, dass A' ein von A verschiedener Rest der Formel 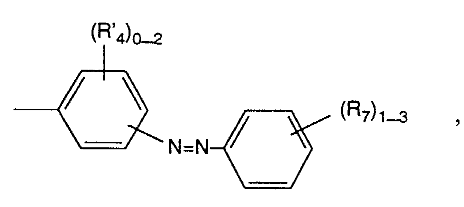 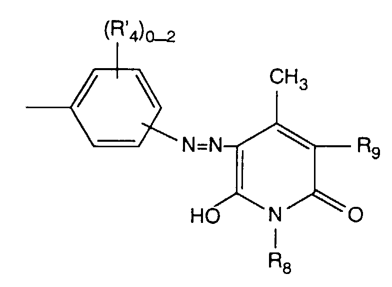 oder 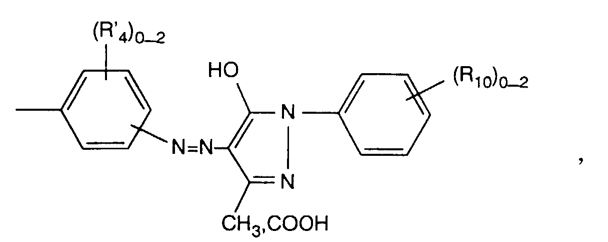 ist, worin (R'₄)₀₋₂ für 0 bis 2 gleiche oder verschiedene Reste ausgewählt aus der Gruppe Methyl, Methoxy, Sulfo, Chlor, Hydroxy und Carboxy steht, (R₇)₁₋₃ 1 bis 3 gleiche oder verschiedene Substituenten ausgewählt aus der Gruppe Sulfo, Methyl, Methoxy, Chlor, Hydroxy, Carboxy und o-, m- oder p-Sulfophenylazo darstellt, R₈ Wasserstoff, C₁-C₄-Alkyl oder C₁-C₄-Alkoxy-C₁-C₄-alkyl bedeutet, R₉ Sulfomethyl, Cyano oder Carbamoyl ist und (R₁₀)₀₋₂ für 0 bis 2 gleiche oder verschiedene Reste ausgewählt aus der Gruppe Methyl, Methoxy, Sulfo, Hydroxy, Amino, Acetylamino und Hydroxyacetylamino steht.

18. Verfahren zur Herstellung von Verbindungen der Formel (1) gemäss Anspruch 1, dadurch gekennzeichnet, dass man
a) unabhängig voneinander eine Verbindung der Formel 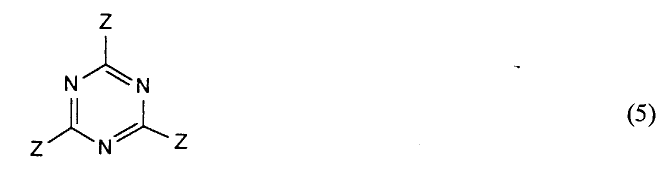 mit einer Verbindung der Formel
A-NHR (6)
zur Verbindung der Formel 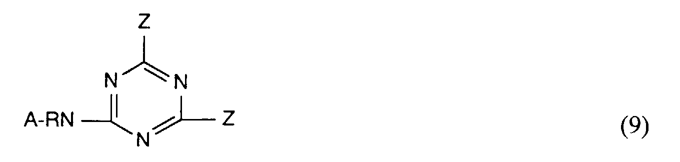 und eine weitere Verbindung der Formel (5) mit einer Verbindung der Formel
A'-NHR' (7)
zur Verbindung der Formel 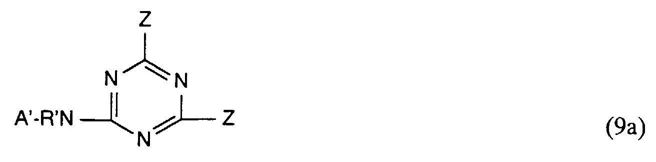 umsetzt,
b) eine Verbindung der Formel
H-X-H (10)
nacheinander in beliebiger Reihenfolge mit den gemäss a) erhältlichen Verbindungen der Formel (9) und (9a) umsetzt und
c) die gemäss b) erhältliche Verbindung der Formel 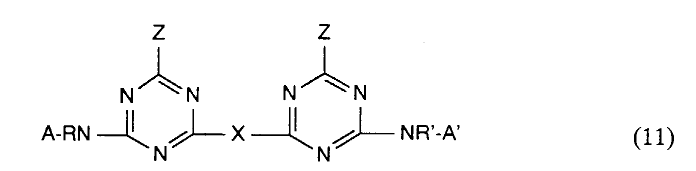 mit einer Verbindung der Formel
R₁H (8)
umsetzt, worin A, A', R, R', R₁ und X jeweils die im Anspruch 1 angegebene Bedeutung haben und Z Halogen, vorzugsweise Chlor, ist.

19. Verwendung der Farbstoffe nach einem der Ansprüche 1 bis 17 zum Färben und Bedrucken von stickstoffhaltigen und insbesondere cellulosischen Fasermaterialien.

20. Verwendung nach Anspruch 19, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

21. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.

## Patentansprüche (Patentansprüche für folgende(n) Vertragsstaat(en): ES)

1. Verfahren zur Herstellung von Verbindungen der Formel 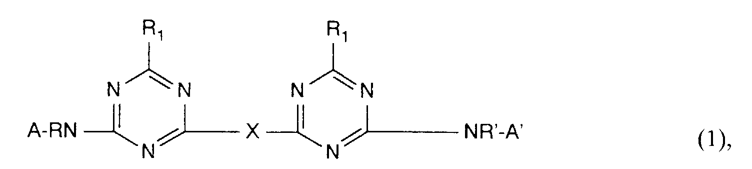 worin A ein Rest der Formel 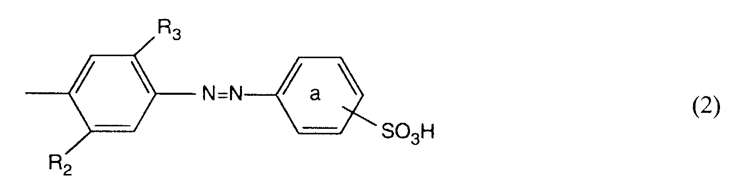 ist, A' die Bedeutung von A hat oder für einen Rest der Formel 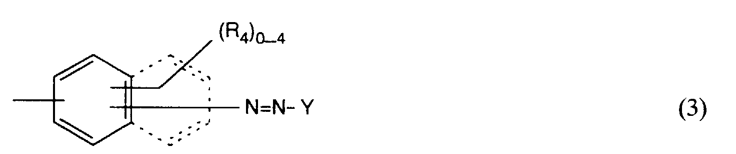 steht, R und R' unabhängig voneinander Wasserstoff oder gegebenenfalls substituiertes C₁-C₄-Alkyl bedeuten, R₁ Hydroxy, C₁-C₄-Alkoxy, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl ist, X ein Brückenglied bedeutet, R₂ und R₃ unabhängig voneinander C₁-C₄-Alkyl, C₁-C₄-Alkoxy, Sulfo, Chlor, Hydroxy, Carboxy oder unsubstituiertes oder im Alkylteil durch Hydroxy substituiertes C₂-C₄-Alkanoylamino bedeuten, der Phenylrest (a) gegebenenfalls weitersubstituiert ist, (R₄)₀₋₄ für 0 bis 4 gleiche oder verschiedene Reste ausgewählt aus der Gruppe C₁-C₄-Alkyl, C₁-C₄-Alkoxy, Sulfo, Chlor, Carboxy und Hydroxy steht und Y ein gegebenenfalls weitersubstituierter Phenylrest oder der Rest eines 1-Phenylpyrazol-5-ons oder 6-Hydroxypyrid-2-ons ist, dadurch gekennzeichnet,
dass man,
a) unabhängig voneinander eine Verbindung der Formel 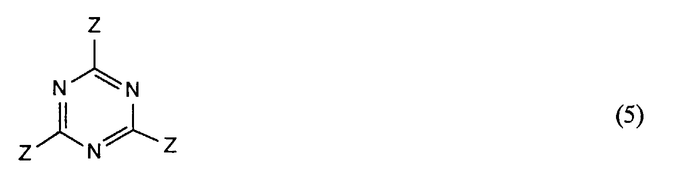 mit einer Verbindung der Formel
A-NHR (6)
zur Verbindung der Formel 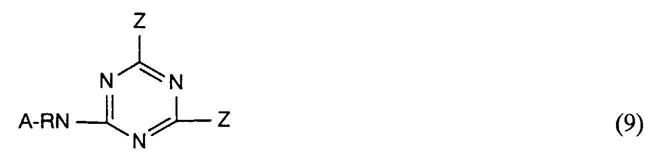 und eine weitere Verbindung der Formel (5) mit einer Verbindung der Formel
A'-NHR' (7)
zur Verbindung der Formel 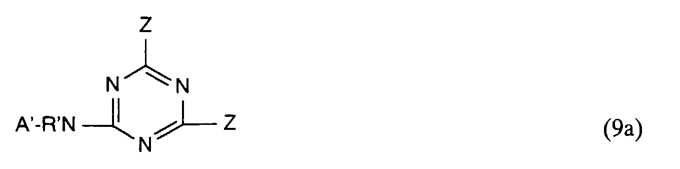 umsetzt,
b) eine Verbindung der Formel
H-X-H (10)
nacheinander in beliebiger Reihenfolge mit den gemäss a) erhältlichen Verbindungen der Formel (9) und (9a) umsetzt und
c) die gemäss b) erhältliche Verbindung der Formel 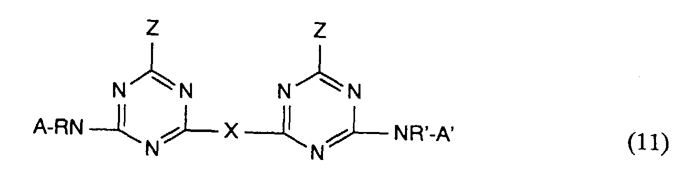 mit einer Verbindung der Formel
R₁H (8)
umsetzt, worin A, A', R, R', R₁ und X jeweils die oben angegebene Bedeutung haben und Z Halogen, vorzugsweise Chlor, ist.

2. Verfahren gemäss Anspruch 1, dadurch gekennzeichnet, dass R und R' jeweils Wasserstoff bedeuten.

3. Verfahren gemäss Anspruch 1 oder 2, dadurch gekennzeichnet, dass R₁ Hydroxy, C₁-C₃-Alkoxy, C₁-C₂-Alkylthio, Amino, unsubstituiertes oder im Alkylteil durch Hydroxy, Carboxy, Sulfo, Methoxy oder Ethoxy substituiertes N-Mono- oder N,N-Di-C₁-C₄-Alkylamino, unsubstituiertes oder im Phenylteil durch Methyl, Methoxy, Chlor, Carboxy und/oder Sulfo substituiertes Phenylamino, N-C₁-C₄-Alkyl-N-phenylamino oder Morpholino bedeutet.

4. Verfahren gemäss einem der Ansprüche 1 bis 3, dadurch gekennzeichnet, dass R₁ unsubstituiertes oder im Alkylteil durch Hydroxy, Carboxy oder Methoxy substituiertes N-Mono- oder N,N-Di-C₁-C₂-Alkylamino, Morpholino, Ethylthio, Phenylamino oder o-, m- oder p-Sulfophenylamino bedeutet.

5. Verfahren gemäss einem der Ansprüche 1 bis 4, dadurch gekennzeichnet, dass R₁ N-β-Hydroxyethylamino, N,N-Di-β-hydroxyethylamino oder Morpholino bedeutet.

6. Verfahren gemäss einem der Ansprüche 1 bis 5, dadurch gekennzeichnet, dass X für ein Brückenglied der Formel
-NR₅-alk-NR'₅- (4a), 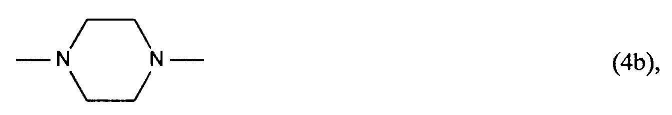 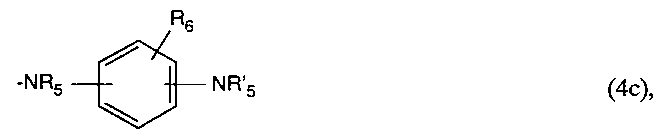 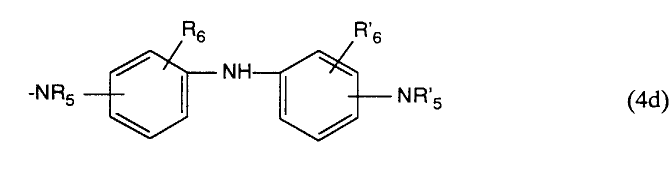
oder 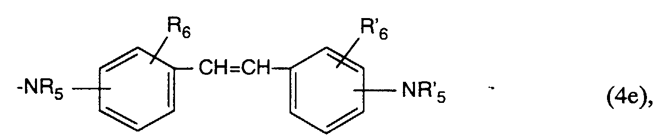 steht, worin für R₅ und R'₅ unabhängig je Wasserstoff oder gegebenenfalls substituiertes C₁-C₄-Alkyl bedeuten, R₆ und R'₆ unabhängig voneinander je Wasserstoff, Sulfo, Methyl, Methoxy oder Chlor sind und alk einen C₁-C₆-Alkylenrest bedeutet.

7. Verfahren gemäss einem der Ansprüche 1 bis 6, dadurch gekennzeichnet, dass X ein Brückenglied der Formel
-NH-(CH₂)₂₋₄-NH- (4a'), 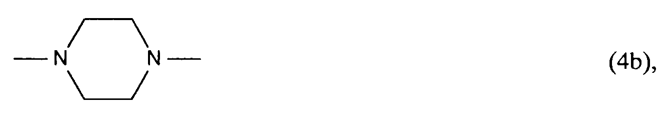 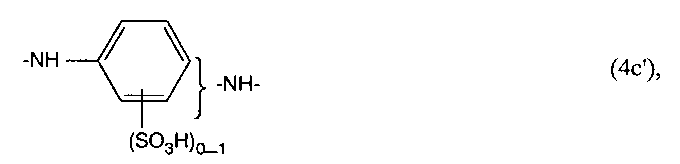 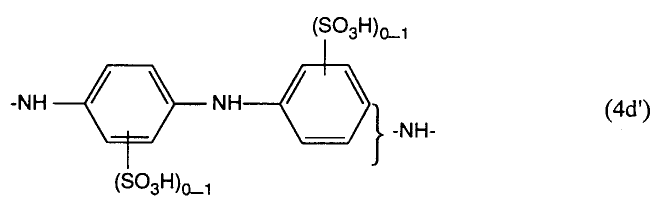
oder 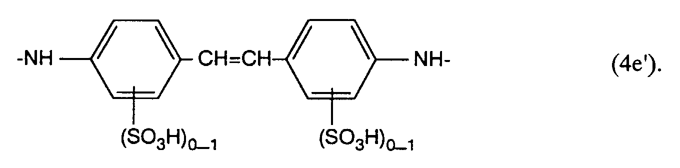 darstellt.

8. Verfahren gemäss einem der Ansprüche 1 bis 7, dadurch gekennzeichnet, dass R₂ und R₃ unabhängig voneinander Methyl, Ethyl, Methoxy, Ethoxy, Sulfo, Hydroxy, Chlor, Carboxy, Acetylamino, Propionylamino oder Hydroxyacetylamino bedeuten.

9. Verfahren gemäss einem der Ansprüche 1 bis 8, dadurch gekennzeichnet, dass R₂ und R₃ unabhängig voneinander Methyl, Methoxy, Sulfo oder Acetylamino bedeuten.

10. Verfahren gemäss einem der Ansprüche 1 bis 9, dadurch gekennzeichnet, dass R₂ Methoxy und R₃ Methyl sind.

11. Verfahren gemäss einem der Ansprüche 1 bis 10, dadurch gekennzeichnet, dass der Phenylrest (a) unsubstituiert oder durch C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino oder Arylazo weitersubstituiert ist.

12. Verfahren gemäss einem der Ansprüche 1 bis 11, dadurch gekennzeichnet, dass der Phenylrest (a) unsubstituiert oder durch C₁-C₄-Alkyl, C₁-C₄-Alkoxy, Chlor, Hydroxy, Carboxy, C₂-C₃-Alkanoylamino und/oder unsubstituiertes oder durch Sulfo, Methyl, Methoxy und/oder Chlor substituiertes Phenylazo weitersubstituiert ist.

13. Verfahren gemäss einem der Ansprüche 1 bis 12, dadurch gekennzeichnet, dass der Phenylrest (a) unsubstituiert oder durch Methyl, Methoxy, Acetylamino oder Chlor weitersubstituiert ist.

14. Verfahren gemäss einem der Ansprüche 1 bis 13, dadurch gekennzeichnet, dass A und A' und R und R' jeweils gleich sind.

15. Verfahren gemäss einem der Ansprüche 1 bis 13, dadurch gekennzeichnet, dass (R₄)₀₋₄ für 0 bis 4 gleiche oder verschiedene Reste ausgewählt aus der Gruppe Methyl, Methoxy, Chlor, Hydroxy, Carboxy und Sulfo steht.

16. Verfahren gemäss einem der Ansprüche 1 bis 13 oder 15, dadurch gekennzeichnet, dass der Rest Y unsubstituiert oder durch C₁-C₄-Alkyl, C₁-C₄-Alkoxy, C₁-C₄-Alkoxy- C₁-C₄-alkyl, gegebenenfalls durch Hydroxy substituiertes C₂-C₄-Alkanoylamino, Benzoylamino, Amino, unsubstituiertes oder im Alkylteil durch -OH, -OCOCH₃, -OSO₃H, -CN oder Halogen substituiertes N-Mono- oder N,N-Di-C₁-C₄-Alkylamino, Phenylamino, Mono- oder Di-Sulfobenzylamino, C₁-C₄-Alkoxycarbonyl, C₁-C₄-Alkylsulfonyl, Phenylsulfonyloxy, Trifluormethyl, Nitro, Cyano, Halogen, Carbamoyl, N-Mono- oder N,N-Di-C₁-C₄-Alkylcarbamoyl, Sulfamoyl, N-Mono- oder N,N-Di-C₁-C₄-Alkylsulfamoyl, N-(β-hydroxyethyl)-sulfamoyl, N,N-Di-(β-hydroxyethyl)-sulfamoyl, N-Phenylsulfamoyl, Hydroxy, Carboxy, Sulfo, Sulfomethyl, Ureido und/oder unsubstituiertes oder durch Sulfo, C₁-C₄-Alkyl, C₁-C₄-Alkoxy, Hydroxy und/oder Halogen substituiertes Phenylazo substituiert ist.

17. Verfahren gemäss einem der Ansprüche 1 bis 13, 15 oder 16, dadurch gekennzeichnet, dass A' ein von A verschiedener Rest der Formel 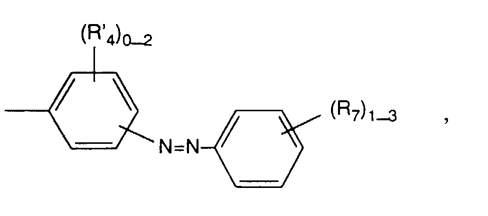 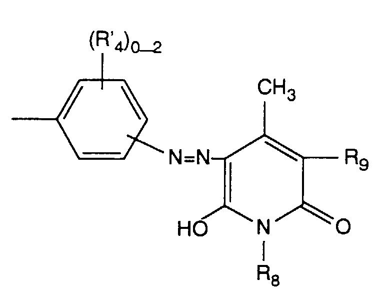 oder 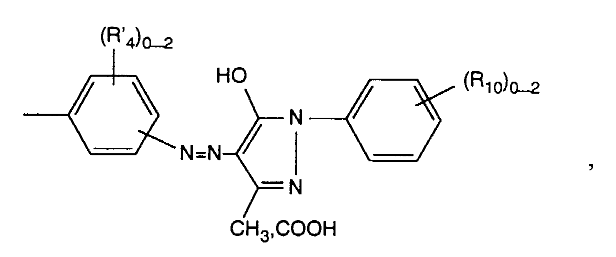 ist, worin (R'₄)₀₋₂ für 0 bis 2 gleiche oder verschiedene Reste ausgewählt aus der Gruppe Methyl, Methoxy, Sulfo, Chlor, Hydroxy und Carboxy steht, (R₇)₁₋₃ 1 bis 3 gleiche oder verschiedene Substituenten ausgewählt aus der Gruppe Sulfo, Methyl, Methoxy, Chlor, Hydroxy, Carboxy und o-, m- oder p-Sulfophenylazo darstellt, R₈ Wasserstoff, C₁-C₄-Alkyl oder C₁-C₄-Alkoxy-C₁-C₄-alkyl bedeutet, R₉ Sulfomethyl, Cyano oder Carbamoyl ist und (R₁₀)₀₋₂ für 0 bis 2 gleiche oder verschiedene Reste ausgewählt aus der Gruppe Methyl, Methoxy, Sulfo, Hydroxy, Amino, Acetylamino und Hydroxyacetylamino steht.

18. Verwendung der Farbstoffe nach einem der Ansprüche 1 bis 17 zum Färben und Bedrucken von stickstoffhaltigen und insbesondere cellulosischen Fasermaterialien.

19. Verwendung nach Anspruch 18, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

20. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.

## Claims (Claims for the following Contracting State(s): BE, CH, DE, FR, GB, IT, LI)

1. A compound of the formula 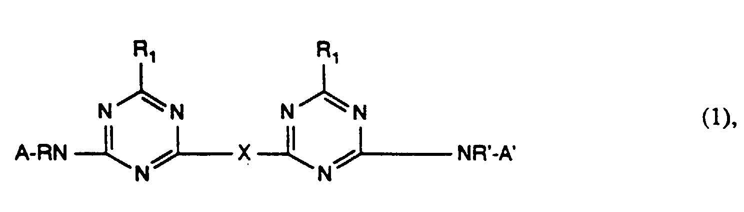 where A is a radical of the formula 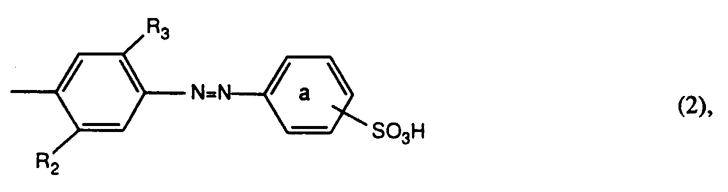 A' has the meaning A or is a radical of the formula 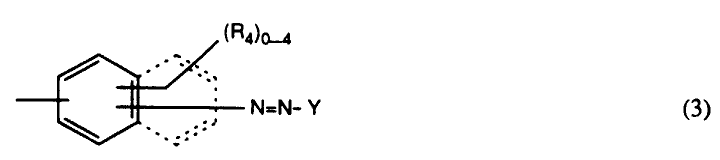 R and R' are each independently of the other hydrogen or substituted or unsubstituted C₁-C₄alkyl, R₁ is hydroxyl, C₁-C₄alkoxy, C₁-C₄alkylthio, amino, unsubstituted or hydroxyl-, sulfo-, carboxyl- or C₁-C₄alkoxy-substituted (in the alkyl moiety) N-mono- or N,N-di-C₁-C₄alkylamino, cyclohexylamino, unsubstituted or C₁-C₄alkyl-, C₁-C₄alkoxy-, carboxyl-, sulfo- and/or halogen-substituted (in the phenyl moiety) phenylamino or N-C₁-C₄alkyl-N-phenylamino, morpholino or 3-carboxy- or 3-carbamoyl-pyridin-1 -yl, X is a bridge member, R₂ and R₃ are each independently of the other C₁-C₄alkyl, C₁-C₄alkoxy, sulfo, chlorine, hydroxyl, carboxyl or unsubstituted or hydroxyl-substituted (in the alkyl moiety) C₂-C₄alkanoylamino, the phenyl radical (a) may be further substituted, (R₄)₀₋₄ represents from 0 to 4 identical or different radicals selected from the group consisting of C₁-C₄alkyl, C₁-C₄alkoxy, sulfo, chlorine, carboxyl and hydroxyl, and Y is phenyl which may be further substituted or the radical of a 1-phenylpyrazol-5-one or of a 6-hydroxypyrid-2-one.

2. A compound according to claim 1, wherein R and R' are each hydrogen.

3. A compound as claimed in either of claims 1 and 2, wherein R₁ is hydroxyl, C₁-C₃alkoxy, C₁-C₂alkylthio, amino, unsubstituted or hydroxyl-, carboxyl-, sulfo-, methoxy- or ethoxy-substituted (in the alkyl moiety) N-mono- or N,N-di-C₁-C₄alkylamino, unsubstituted or methyl-, methoxy-, chlorine-, carboxyl- and/or sulfo-substituted (in the phenyl moiety) phenylamino, N-C₁-C₄alkyl-N-phenylamino or morpholino.

4. A compound according to any one of claims 1 to 3, wherein R₁ is unsubstituted or hydroxyl-, carboxyl- or methoxy-substituted (in the alkyl moiety) N-mono- or N,N-di-C₁-C₂alkylamino, morpholino, ethylthio, phenylamino or o-, m- or p-sulfophenylamino.

5. A compound according to any one of claims 1 to 4, wherein R₁ is N-β-hydroxyethylamino, N,N-di-β-hydroxyethylamino or morpholino.

6. A compound according to any one of claims 1 to 5, wherein X is a bridge member of the formula
-NR₅-alk-NR'₅- (4a), 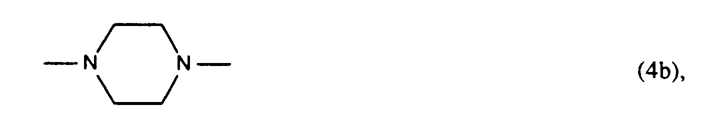 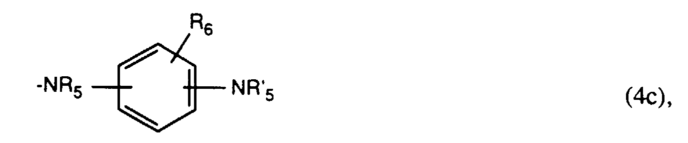 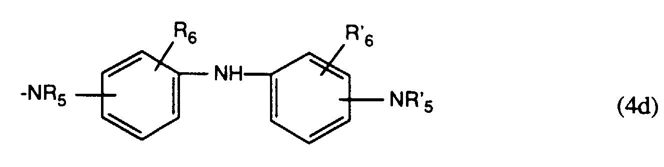
or 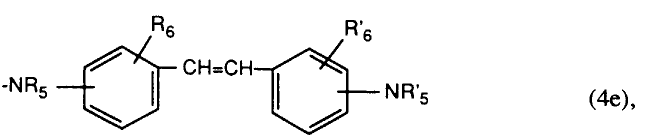 where R₅ and R'₅ are each independently of the other hydrogen or substituted or unsubstituted C₁-C₄alkyl, R₆ and R'₆ are each independently of the other hydrogen, sulfo, methyl, methoxy or chlorine, and alk is a C₁-C₆alkylene radical.

7. A compound according to any one of claims 1 to 6, wherein X is a bridge member of the formula
-NH-(CH₂)₂₋₄-NH- (4a'), 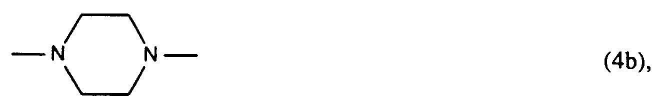 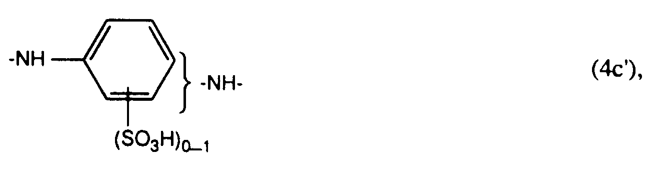 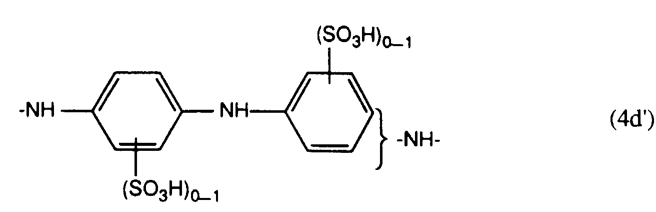
or

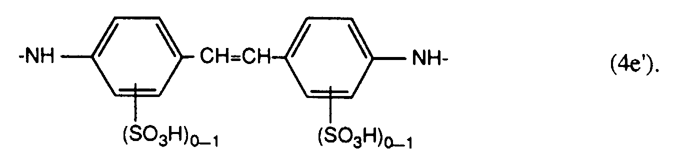

8. A compound according to any one of claims 1 to 7, wherein R₂ and R₃ are each independently of the other methyl, ethyl, methoxy, ethoxy, sulfo, hydroxyl, chlorine, carboxyl, acetylamino, propionylamino or hydroxyacetylamino.

9. A compound according to any one of claims 1 to 8, wherein R₂ and R₃ are each independently of the other methyl, methoxy, sulfo or acetylamino.

10. A compound according to any one of claims 1 to 9, wherein R₂ is methoxy and R₃ is methyl.

11. A compound according to any one of claims 1 to 10, wherein the phenyl radical (a) is unsubstituted or further substituted by C₁-C₄alkyl, C₁-C₄alkoxy, halogen, hydroxyl, carboxyl, sulfo, unsubstituted or hydroxyl-substituted C₂-C₄alkanoylamino or arylazo.

12. A compound according to any one of claims 1 to 11, wherein the phenyl radical (a) is unsubstituted or further substituted by C₁-C₄alkyl, C₁-C₄alkoxy, chlorine, hydroxyl, carboxyl, C₂-C₃alkanoylamino and/or unsubstituted or sulfo-, methyl-, methoxy- and/or chlorine-substituted phenylazo.

13. A compound according to any one of claims 1 to 12, wherein the phenyl radical (a) is unsubstituted or further substituted by methyl, methoxy, acetylamino or chlorine.

14. A compound according to any one of claims 1 to 13, wherein A and A' and R and R' are each identical.

15. A compound according to any one of claims 1 to 13, wherein (R₄)₀₋₄ represents from 0 to 4 identical or different radicals selected from the group consisting of methyl, methoxy, chlorine, hydroxyl, carboxyl and sulfo.

16. A compound according to any one of claims 1 to 13 or 15, wherein the radical Y is unsubstituted or substituted by C₁-C₄alkyl, C₁-C₄alkoxy, C₁-C₄alkoxy-C₁ -C₄alkyl, unsubstituted or hydroxyl-substituted C₂-C₄alkanoylamino, benzoylamino, amino, unsubstituted or OH-, H₃COCO-, HO₃SO-, NC- or halogen-substituted (in the alkyl moiety) N-mono- or N,N-di-C₁-C₄alkylamino, phenylamino, mono- or di-sulfobenzylamino, C₁-C₄alkoxycarbonyl, C₁-C₄alkylsulfonyl, phenylsulfonyloxy, trifluoromethyl, nitro, cyano, halogen, carbamoyl, N-mono- or N,N-di-C₁ -C₄alkylcarbamoyl, sulfamoyl, N-mono- or N,N-di-C₁-C₄alkylsulfamoyl, N-(β-hydroxyethyl)sulfamoyl, N,N-di(β-hydroxyethyl)sulfamoyl, N-phenylsulfamoyl, hydroxyl, carboxyl, sulfo, sulfomethyl, ureido, and/or unsubstituted or sulfo-, C₁-C₄alkyl-, C₁-C₄alkoxy-, hydroxyl- and/or halogen-substituted phenylazo.

17. A compound according to any one of claims 1 to 13, 15 or 16, wherein A' as a radical other than A conforms to the formula 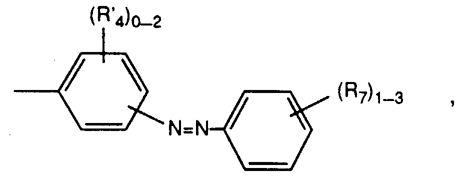 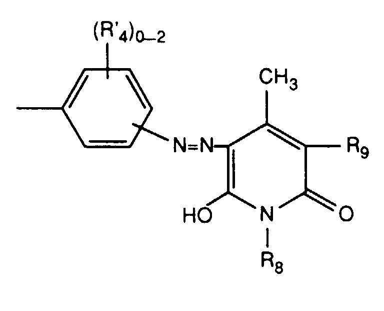 or 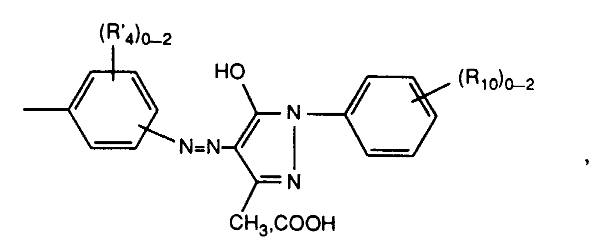 where (R'₄)₀₋₂ represents from 0 to 2 identical or different radicals selected from the group consisting of methyl, methoxy, sulfo, chlorine, hydroxyl and carboxyl, (R₇)₁₋₃ represents from 1 to 3 identical or different substituents selected from the group consisting of sulfo, methyl, methoxy, chlorine, hydroxyl, carboxyl and o-, m- or p-sulfophenylazo, R₈ is hydrogen, C₁-C₄alkyl or C₁-C₄alkoxy-C₁-C₄alkyl, R₉ is sulfomethyl, cyano or carbamoyl, and (R₁₀)₀₋₂ represents from 0 to 2 identical or different radicals selected from the group consisting of methyl, methoxy, sulfo, hydroxyl, amino, acetylamino and hydroxyacetylamino.

18. A process for preparing a compound of the formula (1) according to claim 1, which comprises
a) reacting independently of one another a compound of the formula 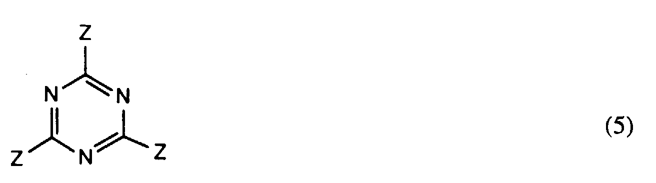 with a compound of the formula
A-NHR (6)
to give a compound of the formula 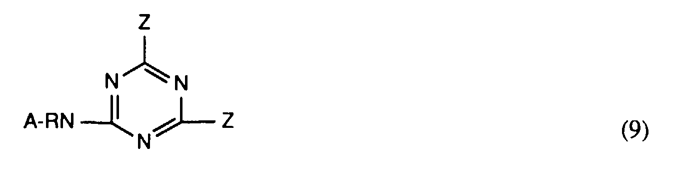 and a further compound of the formula (5) with a compound of the formula
A'-NHR' (7)
to give a compound of the formula 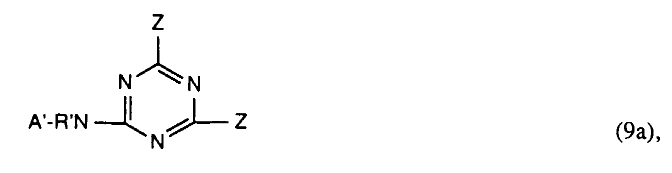
b) reacting a compound of the formula
H-X-H (10)
in succession in any desired order with the compounds of the formulae (9) and (9a) obtainable as per a), and
c) reacting the compound of the formula 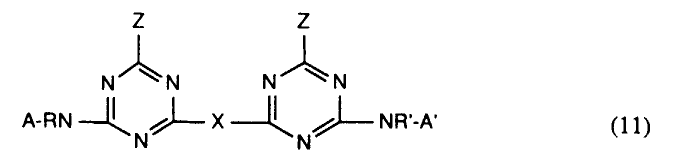 obtainable as per b) with a compound of the formula
R₁H (8)
where A, A', R, R', R₁ and X are each as defined in claim 1 and Z is halogen, preferably chlorine.

19. The use of a dye according to any one of claims 1 to 17 for dyeing and printing nitrogen-containing and in particular cellulosic fibre materials.

20. A use according to claim 19, wherein blends of synthetic fibres and cellulosic fibre materials, in particular polyester/cotton blend fabrics, are dyed in the presence of a disperse dye for the polyester fibres under the dyeing conditions for polyester fibres.

21. A process for dyeing polyester/cotton blend fabrics with disperse and direct dyes, which comprises using in a single-stage, single-bath process in addition to the disperse dyes dyes of the formula (1) according to claim 1 and dyeing from an aqueous liquor at temperatures within the range from 100 to 150°C, preferably from 120 to 130°C, and at a pH between 4 and 7.5.

## Claims (Claims for the following Contracting State(s): ES)

1. A process for preparing a compound of the formula 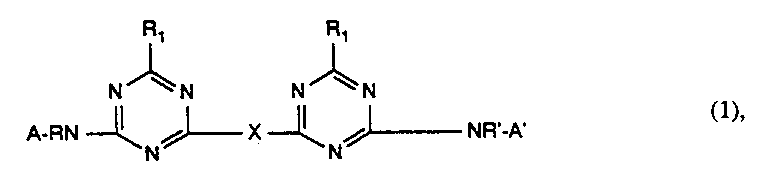 where A is a radical of the formula 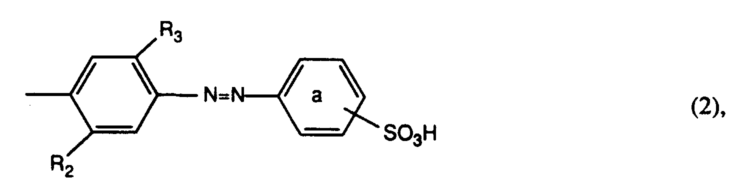 A' has the meaning A or is a radical of the formula 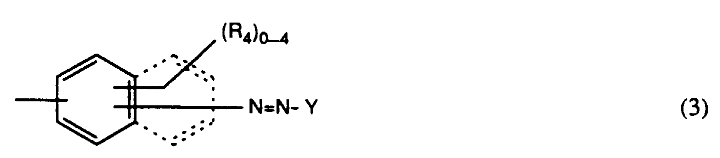 R and R' are each independently of the other hydrogen or substituted or unsubstituted C₁-C₄alkyl, R₁ is hydroxyl, C₁-C₄alkoxy, C₁-C₄alkylthio, amino, unsubstituted or hydroxyl-, sulfo-, carboxyl- or C₁-C₄alkoxy-subsdtuted (in the alkyl moiety) N-mono- or N,N-di-C₁-C₄alkylamino, cyclohexylamino, unsubstituted or C₁-C₄alkyl-, C₁-C₄alkoxy-, carboxyl-, sulfo- and/or halogen-substituted (in the phenyl moiety) phenylamino or N-C₁ -C₄alkyl-N-phenylamino, morpholino or 3-carboxy- or 3-carbamoyl-pyridin-1-yl, X is a bridge member, R₂ and R₃ are each independently of the other C₁-C₄alkyl, C₁-C₄alkoxy, sulfo, chlorine, hydroxyl, carboxyl or unsubstituted or hydroxyl-substituted (in the alkyl moiety)C₂-C₄alkanoylamino, the phenyl radical (a) may be further substituted, (R₄)₀₋₄ represents from 0 to 4 identical or different radicals selected from the group consisting of C₁-C₄alkyl, C₁-C₄alkoxy, sulfo, chlorine, carboxyl and hydroxyl, and Y is phenyl which may be further substituted or the radical of a 1-phenylpyrazol-5-one or of a 6-hydroxypyrid-2-one, which comprises
a) reacting independently of one another a compound of the formula 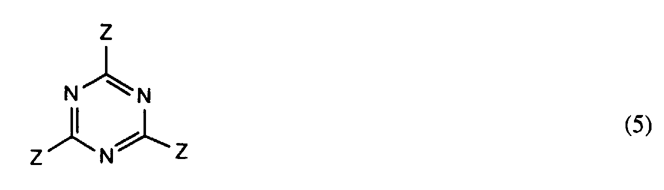 with a compound of the formula
A-NHR (6)
to give a compound of the formula 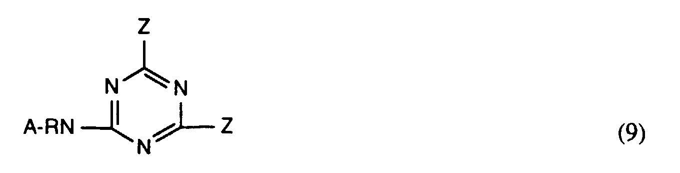 and a further compound of the formula (5) with a compound of the formula
A'-NHR' (7)
to give a compound of the formula 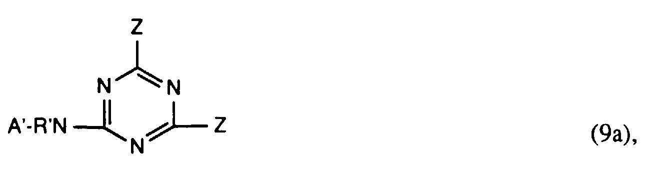
b) reacting a compound of the formula
H-X-H (10)
in succession in any desired order with the compounds of the formulae (9) and (9a) obtainable as per a), and
c) reacting the compound of the formula 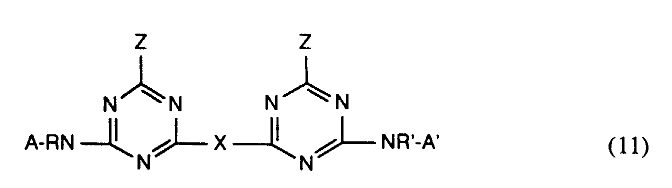 obtainable as per b) with a compound of the formula
R₁H (8)
where A, A', R, R', R₁ and X are each as defined above and Z is halogen, preferably chlorine.

2. A process according to claim 1, wherein R and R' are each hydrogen.

3. A process as claimed in either of claims 1 and 2, wherein R₁ is hydroxyl, C₁-C₃alkoxy, C₁-C₂alkylthio, amino, unsubstituted or hydroxyl-, carboxyl-, sulfo-, methoxy- or ethoxy-substituted (in the alkyl moiety) N-mono- or N,N-di-C₁-C₄alkylamino, unsubstituted or methyl-, methoxy-, chlorine-, carboxyl- and/or sulfo-substituted (in the phenyl moiety) phenylamino, N-C₁ -C₄alkyl-N-phenylamino or morpholino.

4. A process according to any one of claims 1 to 3, wherein R₁ is unsubstituted or hydroxyl-, carboxyl- or methoxy-substituted (in the alkyl moiety) N-mono- or N,N-di-C₁-C₂alkylamino, morpholino, ethylthio, phenylamino or o-, m- or p-sulfophenylamino.

5. A process according to any one of claims 1 to 4, wherein R₁ is N-β-hydroxyethylamino, N,N-di-β-hydroxyethylamino or morpholino.

6. A process according to any one of claims 1 to 5, wherein X is a bridge member of the formula
-NR₅-alk-NR'₅- (4a), 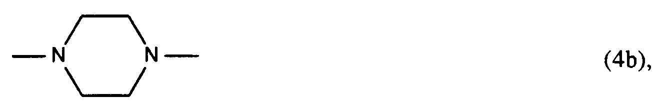 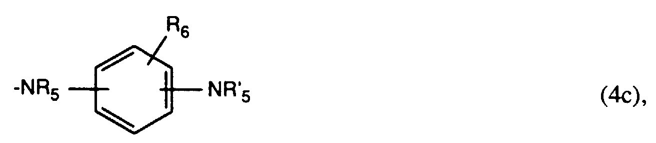 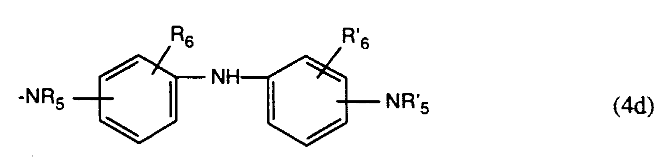
or 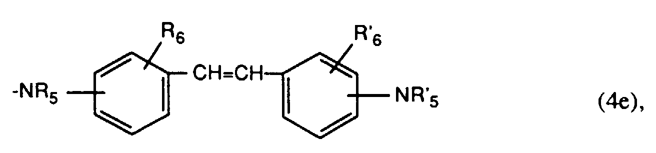 where R₅ and R'₅ are each independently of the other hydrogen or substituted or unsubstituted C₁-C₄alkyl, R₆ and R'₆ are each independently of the other hydrogen, sulfo, methyl, methoxy or chlorine, and alk is a C₁-C₆alkylene radical.

7. A process according to any one of claims 1 to 6, wherein X is a bridge member of the formula
-NH-(CH₂)₂₋₄-NH- (4a'), 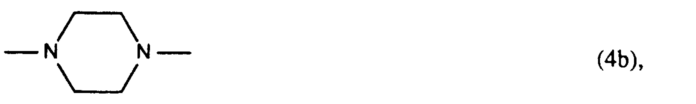 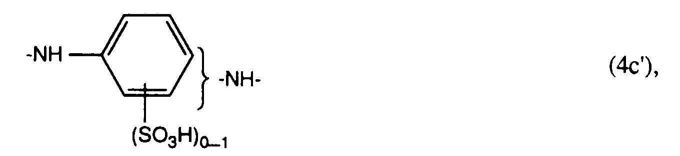 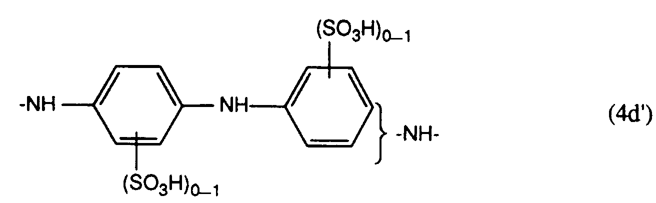
or

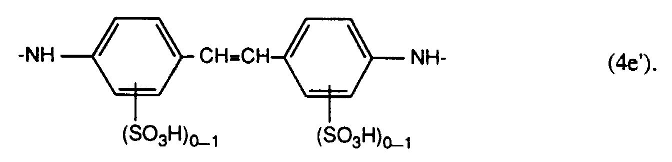

8. A process according to any one of claims 1 to 7, wherein R₂ and R₃ are each independently of the other methyl, ethyl, methoxy, ethoxy, sulfo, hydroxyl, chlorine, carboxyl, acetylamino, propionylamino or hydroxyacetylamino.

9. A process according to any one of claims 1 to 8, wherein R₂ and R₃ are each independently of the other methyl, methoxy, sulfo or acetylamino.

10. A process according to any one of claims 1 to 9, wherein R₂ is methoxy and R₃ is methyl.

11. A process according to any one of claims 1 to 10, wherein the phenyl radical (a) is unsubstituted or further substituted by C₁-C₄alkyl, C₁-C₄alkoxy, halogen, hydroxyl, carboxyl, sulfo, unsubstituted or hydroxyl-substituted C₂-C₄alkanoylamino or arylazo.

12. A process according to any one of claims 1 to 11, wherein the phenyl radical (a) is unsubstituted or further substituted by C₁-C₄alkyl, C₁-C₄alkoxy, chlorine, hydroxyl, carboxyl, C₂-C₃alkanoylamino and/or unsubstituted or sulfo-, methyl-, methoxy- and/or chlorine-substituted phenylazo.

13. A process according to any one of claims 1 to 12, wherein the phenyl radical (a) is unsubstituted or further substituted by methyl, methoxy, acetylamino or chlorine.

14. A process according to any one of claims 1 to 13, wherein A and A' and R and R' are each identical.

15. A process according to any one of claims 1 to 13, wherein (R₄)₀₋₄ represents from 0 to 4 identical or different radicals selected from the group consisting of methyl, methoxy, chlorine, hydroxyl, carboxyl and sulfo.

16. A process according to any one of claims 1 to 13 or 15, wherein the radical Y is unsubstituted or substituted by C₁-C₄alkyl, C₁-C₄alkoxy, C₁-C₄alkoxy-C₁-C₄alkyl, unsubstituted or hydroxyl-substituted C₂-C₄alkanoylamino, benzoylamino, amino, unsubstituted or OH-, H₃COCO-, HO₃SO-, NC- or halogen-substituted (in the alkyl moiety) N-mono- or N,N-di-C₁-C₄alkylamino, phenylamino, mono- or di-sulfobenzylamino, C₁-C₄alkoxycarbonyI, C₁-C₄alkylsulfonyl, phenylsulfonyloxy, trifluoromethyl, nitro, cyano, halogen, carbamoyl, N-mono- or N,N-di-C₁-C₄alkylcarbamoyl, sulfamoyl, N-mono- or N,N-di-C₁-C₄alkylsulfamoyl, N-(β-hydroxyethyl)sulfamoyl, N,N-di(β-hydroxyethyl)sulfamoyl, N-phenylsulfamoyl, hydroxyl, carboxyl, sulfo, sulfomethyl, ureido, and/or unsubstituted or sulfo-, C₁-C₄alkyl-, C₁-C₄alkoxy-, hydroxyl- and/or halogen-substituted phenylazo.

17. A process according to any one of claims 1 to 13, 15 or 16, wherein A' as a radical other than A conforms to the formula 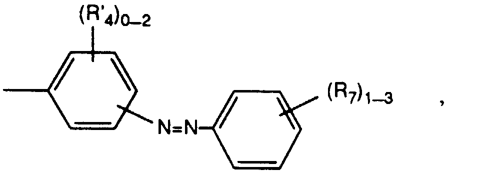 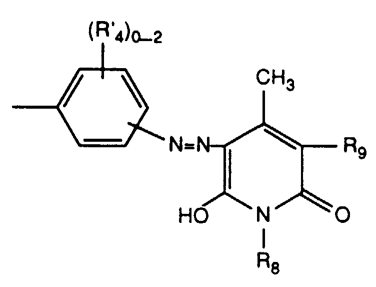 or 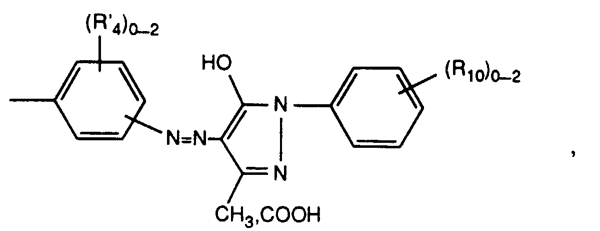 where (R'₄)₀₋₂ represents from 0 to 2 identical or different radicals selected from the group consisting of methyl, methoxy, sulfo, chlorine, hydroxyl and carboxyl, (R₇)₁₋₃ represents from 1 to 3 identical or different substituents selected from the group consisting of sulfo, methyl, methoxy, chlorine, hydroxyl, carboxyl and o-, m- or p-sulfophenylazo, R₈ is hydrogen, C₁-C₄alkyl or C₁-C₄alkoxy-C₁-C₄alkyl, R₉ is sulfomethyl, cyano or carbamoyl, and (R₁₀)₀₋₂ represents from 0 to 2 identical or different radicals selected from the group consisting of methyl, methoxy, sulfo, hydroxyl, amino, acetylamino and hydroxyacetylamino.

18. The use of a dye according to any one of claims 1 to 17 for dyeing and printing nitrogen-containing and in particular cellulosic fibre materials.

19. A use according to claim 18, wherein blends of synthetic fibres and cellulosic fibre materials, in particular polyester/cotton blend fabrics, are dyed in the presence of a disperse dye for the polyester fibres under the dyeing conditions for polyester fibres.

20. A process for dyeing polyester/cotton blend fabrics with disperse and direct dyes, which comprises using in a single-stage, single-bath process in addition to the disperse dyes dyes of the formula (1) according to claim 1 and dyeing from an aqueous liquor at temperatures within the range from 100 to 150°C, preferably from 120 to 130°C, and at a pH between 4 and 7.5.

## Revendications (Revendications pour l'(les) Etat(s) contractant(s) suivant(s): BE, CH, DE, FR, GB, IT, LI)

1. Composés de formule 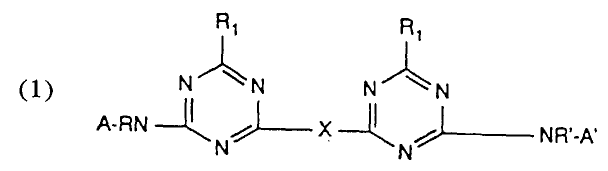 dans laquelle A représente un résidu de formule 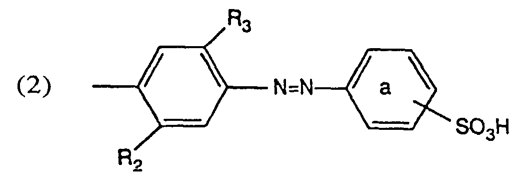
A' a la signification de A ou représente un résidu de formule 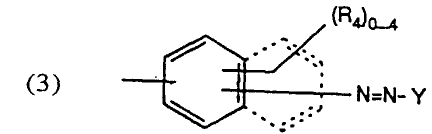 R et R' représentent, indépendamment l'un de l'autre un atome d'hydrogène ou un groupe alkyle en C₁₋₄ éventuellement substitué, R₁ représente un groupe hydroxyle, alcoxy en C₁₋₄, alkylthio en C₁₋₄, amino, N-mono- ou N,N-di-(alkyle en C₁₋₄)-amine dont le(s) résidu(s) alkyle peu(ven)t être non substitué(s) ou porter des substituants hydroxy, sulfo, carboxy ou alcoxy en C₁₋₄; cyclohexylamino; phénylamino ou N-(alkyle en C₁₋₄)-N-phénylamino non substitué ou portant sur le noyau phényle un ou plusieurs substituants alkyle en C₁₋₄, alcoxy en C₁₋₄, carboxy, sulfo et/ou halogéno; morpholino ou 3-carboxy- ou 3-carbamoylpyridin-1-yle,
X représente un élément pontant,
R₂ et R₃ représentent, indépendamment l'un de l'autre, un radical alkyle en C₁₋₄, alcoxy en C₁₋₄, sulfo, chloro, hydroxy, carboxy ou alcanoylamino en C₂₋₄ à chaîne alkyle non substituée ou hydroxylée;
le résidu phényle (a) peut porter à son tour des substituants, (R₄)₀₋₄ représente de 0 à 4 résidus, identiques ou différents, choisis parmi les résidus alkyle en C₁₋₄, alcoxy en C₁₋₄, sulfo, chloro, carboxy et hydroxy et
Y représente un résidu phényle éventuellement substitué ou le résidu d'une 1-phénylpyrazol-5-one ou d'une 6-hydroxypyrid-2-one.

2. Composés selon la revendication 1, caractérisés en ce que R et R' représentent chacun un atome d'hydrogène.

3. Composés selon la revendication 1 ou 2, caractérisés en ce que R₁ représente un groupe hydroxy, alcoxy en C₁₋₃, alkylthio en C₁₋₂, amino, N-mono- ou N,N-di(alkyle en C₁₋₄)-amino dont les résidus alkyle peuvent être non substitués ou porter des substituants hydroxy, sulfo, carboxy, méthoxy ou éthoxy; un groupe phénylamino dont le noyau phényle est non substitué ou porte un ou plusieurs substituants chloro, méthyle, méthoxy, carboxy et/ou sulfo; un groupe N-(alkyle en C₁₋₄)-N-phénylamino ou morpholino.

4. Composés selon l'une quelconque des revendications 1 à 3, caractérisés en ce que R₁ représente un groupe N-mono- ou N,N-di(alkyle en C₁₋₂)-amino à chaînes alkyle non substituées, carboxylées, hydroxylées ou méthoxylées, d'un groupe morpholino, éthylthio, phénylamino, ou o-, m- ou p-sulfophénylamino.

5. Composés selon l'une quelconque des revendications 1 à 4, caractérisés en ce que R₁ représente un groupe N-β-hydroxyéthylamino, N,N-di-β-hydroxyéthylamino ou morpholino.

6. Composés selon l'une quelconque des revendications 1 à 5, caractérisés en ce que X représente un élément pontant de formule
-NR₅-alk-NR'₅- (4a) 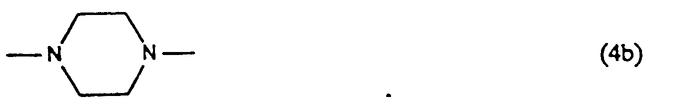 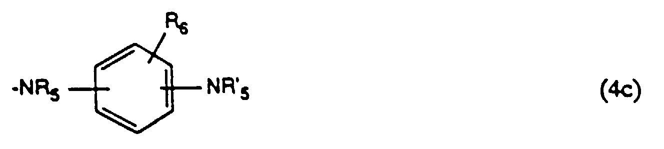 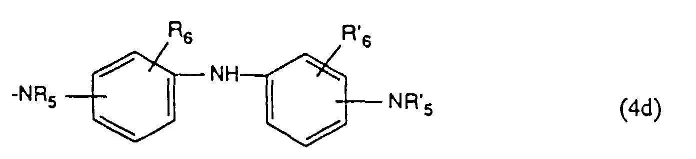 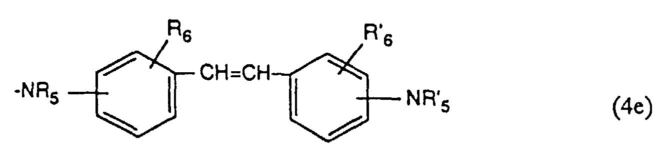
dans lesquelles R₅ et R'₅ représentent, indépendamment l'un de l'autre, un atome d'hydrogène ou un groupe alkyle en C₁₋₄ éventuellement substitué, R₆ et R'₆ représentent indépendamment l'un de l'autre, un atome d'hydrogène, un groupe sulfo, méthyle, méthoxy ou chloro, et *alk* représente un résidu alkylène en C₁₋₆·

7. Composés selon l'une quelconque des revendications 1 à 6, caractérisés en ce que X représente un élément pontant de formule
-NH-(CH₂)₂₋₄-NH- (4a')

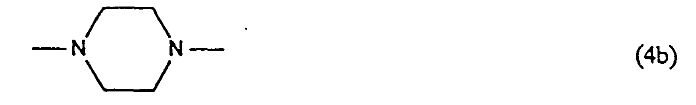

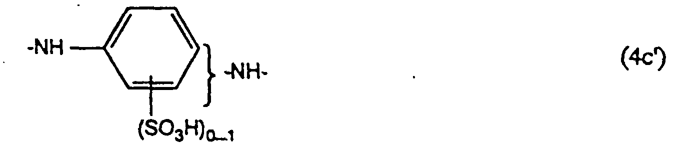

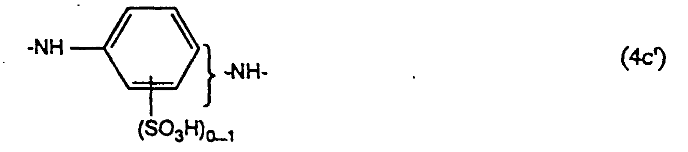

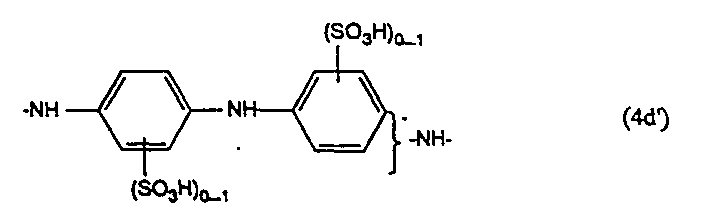

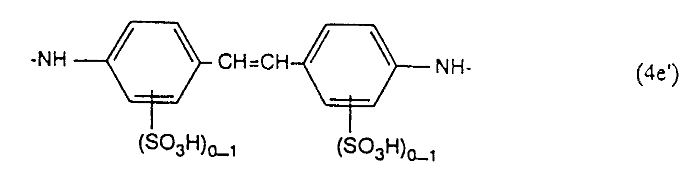

8. Composés selon l'une quelconque des revendications 1 à 7, caractérisés en ce que R₂ et R₃ représentent, indépendamment l'un de l'autre, un groupe méthyle, éthyle, méthoxy, éthoxy, sulfo, hydroxy, chloro, carboxy, acétylamino, propionylamino ou hydroxyacétylamino.

9. Composés selon l'une quelconque des revendications 1 à 8, caractérisés en ce que R₂ et R₃ représentent, indépendamment l'un de l'autre, un groupe méthyle, méthoxy, sulfo ou acétylamino.

10. Composés selon l'une quelconque des revendications 1 à 9, caractérisés en ce que R₂ est un groupe méthoxy et R₃ un groupe méthyle.

11. Composés selon l'une quelconque des revendications 1 à 10, caractérisés en ce que le résidu phényle (a) est non substitué ou porte un ou plusieurs substituants alkyle en C₁₋₄, alcoxy en C₁₋₄, halogéno, hydroxy, carboxy, sulfo, alcanoylamino en C₂₋₄ et arylazo non substitués ou hydroxylés.

12. Composés selon l'une quelconque des revendications 1 à 11, caractérisés en ce que le résidu phényle (a) est non substitué ou porte un ou plusieurs substituants alkyle en C₁₋₄, alcoxy en C₁₋₄, chloro, hydroxy, carboxy, alcanoylamino en C₂₋₃ et/ou phénylazo non substitué ou portant un ou plusieurs substituants sulfo, méthyle, méthoxy et/ou chloro.

13. Composés selon l'une quelconque des revendications 1 à 12, caractérisés en ce que le résidu phényle (a) est non substitué ou porte un ou plusieurs substituants méthyle, méthoxy, acétylamino ou chloro.

14. Composés selon l'une quelconque des revendications 1 à 13, caractérisés en ce que A est identique à A' et R identique à R'.

15. Composés selon l'une quelconque des revendications 1 à 13, caractérisés en ce que (R'₄)₀₋₄ représente de 0 à 4 résidus identiques ou différents choisis dans le groupe formé par les résidus méthyle, méthoxy, chloro, hydroxy, carboxy et sulfo.

16. Composés selon l'une des revendications 1 à 13 ou 15, caractérisés en ce que le résidu Y est non substitué ou porte un ou plusieurs substituants alkyle en C₁₋₄, alcoxy en C₁₋₄, (alcoxy en C₁₋₄)-(alkyle en C₁₋₄); alcanoylamino en C₂₋₄ éventuellement hydroxylé; benzoylamino; amino; N-mono- ou N,N-di(alkyle en C₁₋₄)-amino à chaîne(s) alkyle non substituée(s) ou portant des substituants -OH, -OCOCH₃, -OSO₃H, -CN ou halogéno; phénylamino; mono- ou di-sulfobenzylamino; (alcoxy en C₁₋₄)-carbonyle; (alkyle en C₁₋₄)-sulfonyle; phénylsulfonyloxy; trifluorométhyle; nitro; cyano; halogéno; carbamoyle; N-mono- ou N,N-di(alkyle en C₁₋₄)-carbamoyle; sulfamoyle; N-mono- ou N,N-di-(alkyle en C₁₋₄)-sulfamoyle; N-(β-hydroxyéthyl)-sulfamoyle; N,N-di-(β-hydroxyéthyl)-sulfamoyle; N-phénylsulfamoyle; hydroxy; carboxy; sulfo; sulfométhyle; uréido; et/ou phénylazo non substitué ou portant des substituants sulfo, alkyle en C₁₋₄, alcoxy en C₁₋₄, hydroxy et/ou halogéno.

17. Composés selon l'une quelconque des revendications 1 à 13, 15 ou 16, caractérisés en ce que A' est différent de A et correspond à une des formules 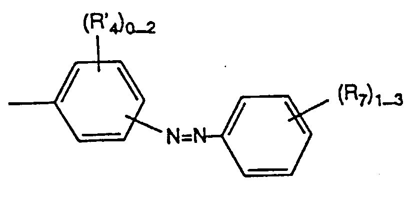 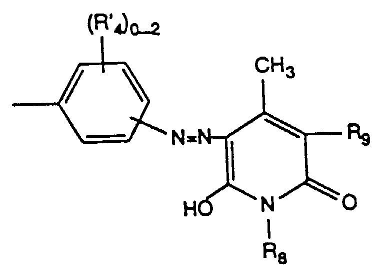 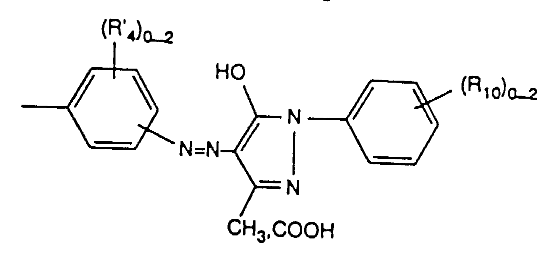 dans lesquelles
(R'₄)₀₋₂ représente de 0 à 2 résidus, identiques ou différents, choisis dans le groupe formé par les résidus méthyle, méthoxy, sulfo, chloro, hydroxy et carboxy,
(R₇)₁₋₃ représente de 1 à 3 substituants identiques ou différents choisis dans le groupe formé par les résidus sulfo, méthyle, méthoxy, chloro, hydroxy, carboxy et o-, m- ou p-sulfophénylazo,
R₈ représente un atome d'hydrogène, un groupe alkyle en C₁₋₄ ou (alcoxy en C₁₋₄)-(alkyle en C₁₋₄),
R₉ représente un groupe sulfométhyle, cyano ou carbamoyle et
(R₁₀)₀₋₂ représente de 0 à 2 résidus, identiques ou différents, choisis dans le groupe formé par les radicaux méthyle, méthoxy, sulfo, hydroxy, amino, acétylamino et hydroxyacétylamino.

18. Procédé de préparation de composés de formule (1) selon la revendication 1, caractérisés en ce que l'on fait réagir indépendamment
a) un composé de formule 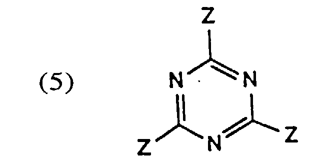 avec un composé de formule
(6) A-NHR
ce qui donne un composé de formule 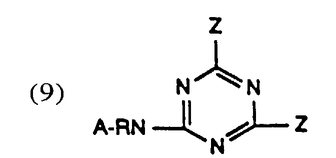 et un autre composé de formule (5) avec un composé de formule
(7) A'-NHR
ce qui donne un composé de formule 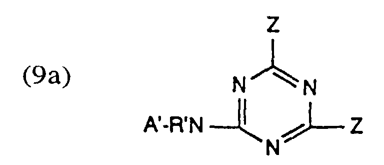
b) un composé de formule
(10) H-X-H
successivement, dans n'importe quel ordre, avec les composés de formule (9) et (9a) obtenus dans a) et
c) le composé obtenu dans b) correspondant à la formule 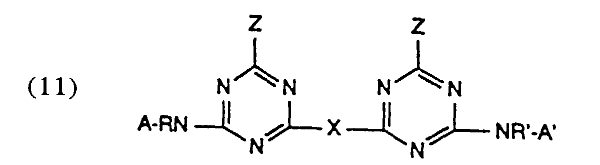 avec un composé de formule
(8) R₁H
où A, A', R, R', R₁ et X ont les significations indiquées dans la revendication 1 et Z représente un atome d'halogène, de préférence un atome de chlore.

19. Utilisation des colorants selon l'une quelconque des revendications 1 à 17 pour la teinture et l'impression de matériaux fibreux contenant des atomes d'azote et en particulier de matériaux fibreux cellulosique.

20. Utilisation selon la revendication 19, caractérisée en ce que l'on teint des mélanges de fibres contenant des fibres synthétiques et des matériaux fibreux cellulosiques, en particulier des tissus mixtes polyester/coton, en présence d'un colorant de dispersion pour la teinture de fibres de polyester dans les conditions de teinture de fibres de polyester.

21. Procédé de teinture de tissus mixtes polyester/coton avec des colorants de dispersion et des colorants directs, caractérisé en ce que l'on utilise, dans un procédé à étape unique et à bain unique, en plus des colorants de dispersion, des colorants de formule (1) selon la revendication 1 et en ce que la teinture se fait dans un bain aqueux à une température comprise entre 100 et 150 °C, de préférence entre 120 et 130 °C et à un pH compris entre 4 et 7,5.

## Revendications (Revendications pour l'(les) Etat(s) contractant(s) suivant(s): ES)

1. Procédé de préparation de composés de formule 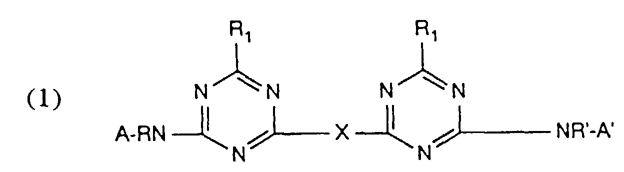 dans laquelle A représente un résidu de formule 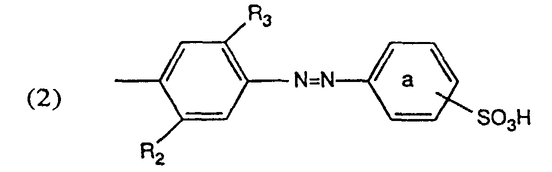
A' a la signification de A ou représente un résidu de formule 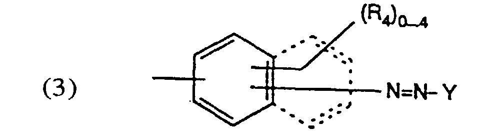 R et R' représentent, indépendamment l'un de l'autre, un atome d'hydrogène ou un groupe alkyle en C₁₋₄ éventuellement substitué, R₁ représente un groupe hydroxyle, alcoxy en C₁₋₄, alkylthio en C₁₋₄, amino, N-mono- ou N,N-di-(alkyle en C₁₋₄)-amino dont le(s) résidu(s) alkyle peu(ven)t être non substitué(s) ou porter des substituants hydroxy, sulfo, carboxy ou alcoxy en C₁₋₄; cyclohexylamino; phénylamino ou N-(alkyle en C₁₋₄) -N-phénylamino non substitué ou portant sur le noyau phényle un ou plusieurs substituants alkyle en C₁₋₄, alcoxy en C₁₋₄, carboxy, sulfo et/ou halogéno; morpholino ou 3-carboxy- ou 3-carbamoylpyridin- 1-yle,
X représente un élément pontant,
R₂ et R₃ représentent, indépendamment l'un de l'autre, un radical alkyle en C₁₋₄, alcoxy en C₁₋₄, sulfo, chloro, hydroxy, carboxy ou alcanoylamino en C₂₋₄ à chaîne alkyle non substituée ou hydroxylée;
le résidu phényle (a) peut porter à son tour des substituants,
(R₄)₀₋₄ représente de 0 à 4 résidus, identiques ou différents, choisis parmi les résidus alkyle en C₁₋₄, alcoxy en C₁₋₄, sulfo, chloro, carboxy et hydroxy et
Y représente un résidu phényle éventuellement substitué ou le résidu d'une 1-phénylpyrazol-5-one ou d'une 6-hydroxypyrid-2-one caractérisés en ce que l'on fait réagir indépendamment
a) un composé de formule 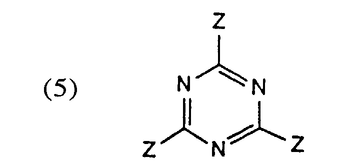 avec un composé de formule
(6) A-NHR
ce qui donne un composé de formule 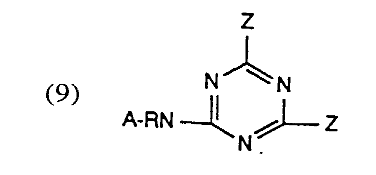 et un autre composé de formule (5) avec un composé de formule
(7) A'-NHR
ce qui donne un composé de formule 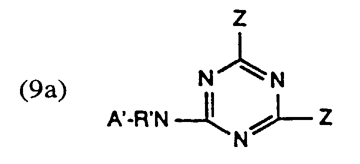
b) un composé de formule
(10) H-X-H
successivement, dans n'importe quel ordre, avec les composés de formule (9) et (9a) obtenus dans a) et
c) le composé obtenu dans b) correspondant à la formule 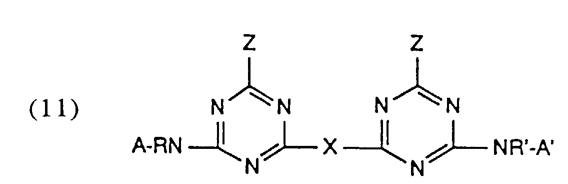 avec un composé de formule
(8) R₁H
où A, A', R, R', R₁ et X ont les significations indiquées ci-dessus et Z représente un atome d'halogène, de préférence un atome de chlore..

2. Procédé selon la revendication 1, caractérisé en ce que R et R' représentent chacun un atome d'hydrogène.

3. Procédé selon la revendication 1 ou 2, caractérisé en ce que R₁ représente un groupe hydroxy, alcoxy en C₁₋₃, alkylthio en C₁₋₂, amino, N-mono- ou N,N-di(alkyle en C₁₋₄)-amino dont les résidus alkyle peuvent être non substitués ou porter des substituants hydroxy, sulfo, carboxy, méthoxy ou éthoxy; un groupe phénylamino dont le noyau phényle est non substitué ou porte un ou plusieurs substituants chloro, méthyle, méthoxy, carboxy et/ou sulfo; un groupe N-(alkyle en C₁₋₄)-N-phénylamino ou morpholino.

4. Procédé selon l'une quelconque des revendications 1 à 3, caractérisé en ce que R₁ représente un groupe N-mono- ou N,N-di(alkyle en C₁₋₂)-amino à chaînes alkyle non substituées, carboxylées, hydroxylées ou méthoxylées, d'un groupe morpholino, éthylthio, phénylamino, ou o-, m- ou p-sulfophénylamino.

5. Procédé selon l'une quelconque des revendications 1 à 4, caractérisé en ce que R₁ représente un groupe N-β-hydroxyéthylamino, N,N-di-β-hydroxyéthylamino ou morpholino.

6. Procédé selon l'une quelconque des revendications 1 à 5, caractérisé en ce que X représente un élément pontant de formule
-NR₅-alk-NR'₅- (4a), 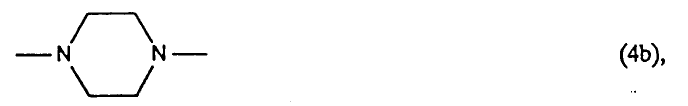 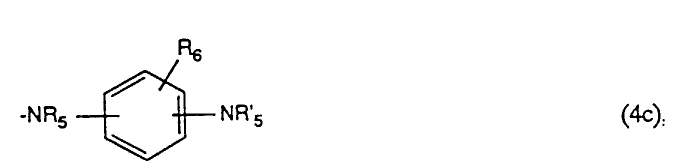 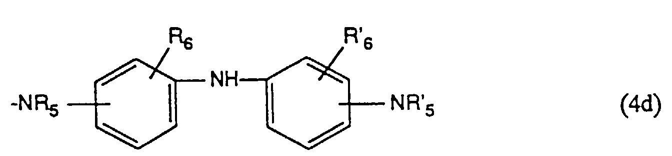 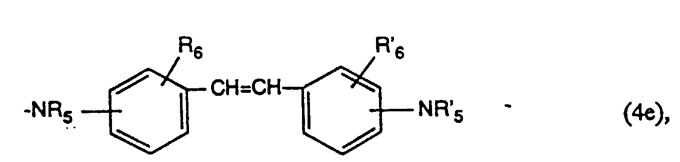
dans lesquelles R₅ et R'₅ représentent, indépendamment l'un de l'autre, un atome d'hydrogène ou un groupe alkyle en C₁₋₄ éventuellement substitué, R₆ et R'₆ représentent, indépendamment l'un de l'autre, un atome d'hydrogène, un groupe sulfo, méthyle, méthoxy ou chloro, et *alk* représente un résidu alkylène en C₁₋₆.

7. Procédé selon l'une quelconque des revendications 1 à 6, caractérisé en ce que X représente un élément pontant de formule
-NH-(CH₂)₂₋₄-NH- (4a'),

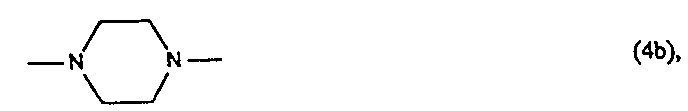

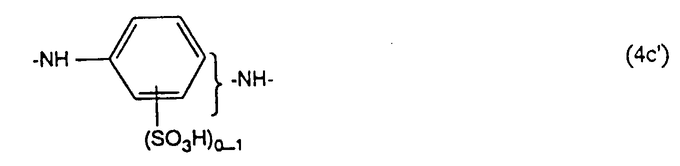

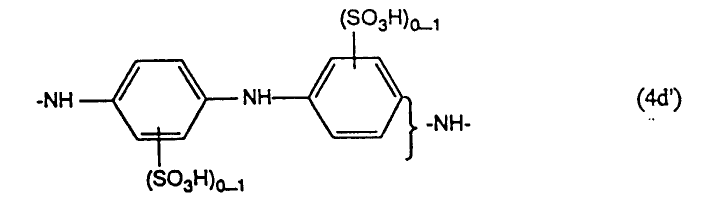

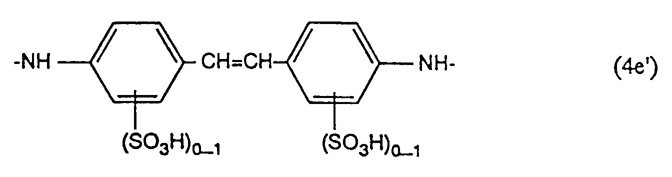

8. Procédé selon l'une quelconque des revendications 1 à 7, caractérisé en ce que R₂ et R₃ représentent, indépendamment l'un de l'autre, un groupe méthyle, éthyle, méthoxy, éthoxy, sulfo, hydroxy, chloro, carboxy, acétylamino, propionylamino ou hydroxyacétylamino.

9. Procédé selon l'une quelconque des revendications 1 à 8, caractérisé en ce que R₂ et R₃ représentent, indépendamment l'un de l'autre, un groupe méthyle, méthoxy, sulfo ou acétylamino.

10. Procédé selon l'une quelconque des revendications 1 à 9, caractérisés en ce que R₂ est un groupe méthoxy et R₃ un groupe méthyle.

11. Procédé selon l'une quelconque des revendications 1 à 10, caractérisé en ce que le résidu phényle (a) est non substitué ou porte un ou plusieurs substituants alkyle en C₁₋₄, alcoxy en C₁₋₄, halogéno, hydroxy, carboxy, sulfo, alcanoylamino en C₂₋₄ et arylazo non substitués ou hydroxylés.

12. Procédé selon l'une quelconque des revendications 1 à 11, caractérisé en ce que le résidu phényle (a) est non substitué ou porte un ou plusieurs substituants alkyle en C₁₋₄, alcoxy en C₁₋₄, chloro, hydroxy, carboxy, alcanoylamino en C₂₋₃ et/ou phénylazo non substitué ou portant un ou plusieurs substituants sulfo, méthyle, méthoxy et/ou chloro.

13. Procédé selon l'une quelconque des revendications 1 à 12, caractérisé en ce que le résidu phényle (a) est non substitué ou porte un ou plusieurs substituants méthyle, méthoxy, acétylamino ou chloro.

14. Procédé selon l'une quelconque des revendications 1 à 13, caractérisé en ce que A est identique à A' et R identique à R'.

15. Procédé selon l'une quelconque des revendications 1 à 13, caractérisé en ce que (R'₄)₀₋₄ représente de 0 à 4 résidus identiques ou différents choisis dans le groupe formé par les résidus méthyle, méthoxy, chloro, hydroxy, carboxy et sulfo.

16. Procédé selon l'une des revendications 1 à 13 ou 15, caractérisé en ce que le résidu Y est non substitué ou porte un ou plusieurs substituants alkyle en C₁₋₄, alcoxy en C₁₋₄, (alcoxy en C₁₋₄)-(alkyle en C₁₋₄); alcanoylamino en C₂₋₄ éventuellement hydroxylé; benzoylamino; amino; N-mono- ou N,N-di(alkyle en C₁₋₄)-amino à chaîne(s) alkyle non substituée(s) ou portant des substituants -OH, -OCOCH₃, -OSO₃H, -CN ou halogéno; phénylamino; mono- ou di-sulfobenzylamino; (alcoxy en C₁₋₄)-carbonyle; (alkyle en C₁₋₄)-sulfonyle; phénylsulfonyloxy; trifluorométhyle; nitro; cyano; halogéno; carbamoyle; N-mono- ou N,N-di(alkyle en C₁₋₄)-carbamoyle; sulfamoyle; N-mono- ou N,N-di-(alkyle en C₁₋₄)-sulfamoyle; N-(β-hydroxyéthyl)-sulfamoyle; N,N-di(β-hydroxyéthyl)-sulfamoyle; N-phénylsulfamoyle; hydroxy; carboxy; sulfo; sulfométhyle; uréido; et/ou phénylazo non substitué ou portant des substituants sulfo, alkyle en C₁₋₄, alcoxy en C₁₋₄, hydroxy et/ou halogéno.

17. Procédé selon l'une quelconque des revendications 1 à 13, 15 ou 16, caractérisé en ce que A' est différent de A et correspond à une des formules 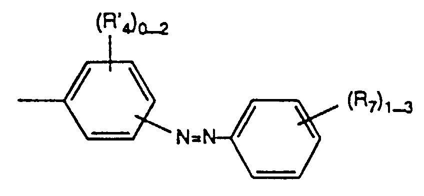 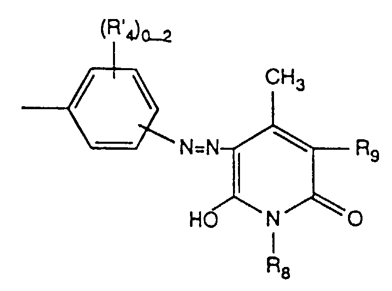 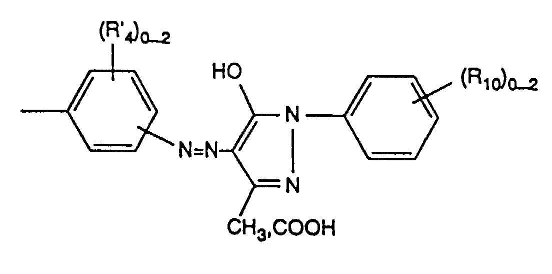 dans lesquelles
(R'₄)₀₋₂ représente de 0 à 2 résidus, identiques ou différents, choisis dans le groupe formé par les résidus méthyle, méthoxy, sulfo, chloro, hydroxy et carboxy,
(R₇)₁₋₃ représente de 1 à 3 substituants identiques ou différents choisis dans le groupe formé par les résidus sulfo, méthyle, méthoxy, chloro, hydroxy, carboxy et o-, m- ou p-sulfophénylazo,
R₈ représente un atome d'hydrogène, un groupe alkyle en C₁₋₄ou (alcoxy en C₁₋₄)-(alkyle en C₁₋₄),
R₉ représente un groupe sulfométhyle, cyano ou carbamoyle et
(R₁₀)₀₋₂ représente de 0 à 2 résidus, identiques ou différents, choisis dans le groupe formé par les radicaux méthyle, méthoxy, sulfo, hydroxy, amino, acétylamino et hydroxyacétylamino.

18. Utilisation des colorants préparés selon l'une quelconque des revendications 1 à 17 pour la teinture et l'impression de matériaux fibreux contenant des atomes d'azote et en particulier de matériaux fibreux cellulosique.

19. Utilisation selon la revendication 18, caractérisée en ce que l'on teint des mélanges de fibres contenant des fibres synthétiques et des matériaux fibreux cellulosiques, en particulier des tissus mixtes polyester/coton, en présence d'un colorant de dispersion pour la teinture de fibres de polyester dans les conditions de teinture de fibres de polyester.

20. Procédé de teinture de tissus mixtes polyester/coton avec des colorants de dispersion et des colorants directs, caractérisé en ce que l'on utilise, dans un procédé à étape unique et à bain unique, en plus des colorants de dispersion, des colorants de formule (1) selon la revendication 1 et en ce que la teinture se fait dans un bain aqueux à une température comprise entre 100 et 150 °C, de préférence entre 120 et 130 °C et à un pH compris entre 4 et 7,5.
